(19) Europäisches Patentamt
European Patent Office
Office européen des brevets

(11) **EP 3 721 665 B1**

(12) **EUROPEAN PATENT SPECIFICATION**

(45) Date of publication and mention
of the grant of the patent:
**27.07.2022 Bulletin 2022/30**

(21) Application number: **17825238.3**

(22) Date of filing: **22.12.2017**

(51) International Patent Classification (IPC):
**H04W 72/04** *(2009.01)*   **H04B 7/155** *(2006.01)*
**H04W 84/12** *(2009.01)*   **H04W 92/12** *(2009.01)*

(52) Cooperative Patent Classification (CPC):
**H04W 72/0406;** H04B 7/15542; H04W 84/12;
H04W 92/12

(86) International application number:
**PCT/EP2017/084398**

(87) International publication number:
**WO 2019/120566 (27.06.2019 Gazette 2019/26)**

(54) **AUTOMATIC CHANNEL SELECTION IN A WLAN**

AUTOMATISCHE KANALAUSWAHL IN EINEM WLAN

SÉLECTION AUTOMATIQUE DE CANAUX DANS UN WLAN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.10.2020 Bulletin 2020/42**

(73) Proprietor: **Huawei Technologies Co., Ltd.
Longgang District
Shenzhen, Guangdong 518129 (CN)**

(72) Inventors:
• **HENCINSKI, Oren
80992 Munich (DE)**

• **WEITZMAN, Avi
80992 Munich (DE)**
• **PATURY, Shahar
80992 Munich (DE)**

(74) Representative: **Gill Jennings & Every LLP
The Broadgate Tower
20 Primrose Street
London EC2A 2ES (GB)**

(56) References cited:
**US-A1- 2005 208 949    US-B2- 9 271 153
US-B2- 9 521 608    US-B2- 9 642 040**

**Description**

BACKGROUND

The present invention, in some embodiments thereof, relates to a device and method and a computer product for Automatic Channel Selection, ACS, in a Wireless local Area Network, WLAN, and in some embodiments, more specifically a Wi-Fi network.

WLANs, the most common of which is Wi-Fi (i.e. a suite of protocols defined by the IEEE 802.11 suite of standards), in some implementations requires a distributed topology whereby more than one Access Point (AP) stations (STAs) to service non-AP STAs distributed through an area needing to be covered by the WLAN. For example, different APs may be required for different rooms.

Communication to and from a given AP is on one of a plurality of channels corresponding to a respective plurality of frequency bands. In some WLAN implementations, especially large environments, the APs of the WLAN are interconnected by a wired backhaul. A central device connected to the backhaul can be used to operate an ACS method to control which channels each AP operates to communicate with which non-AP STAs.

In other WLAN implementations, particularly but not exclusively residential implementations, a wireless backhaul is formed using backhaul devices, which act as repeaters. A typical house may require 2-4 repeaters in order to achieve good coverage. In some WLAN implementations a building apartment deployment may consist of multiple orthogonal distributed Wi-Fi ecosystems.

Each of the wireless backhaul devices is configured to operate as both: (i) a non-AP STA for communicating up the backhaul (i.e. away from end users, to either a first, home gateway AP in the backhaul or to an intermediate backhaul device); and (ii) an AP to communicate distally, away from the first AP (i.e. to non-AP STAs, including end-user STAs and also including non-AP STAs in any more distally located backhaul devices). Each of the first AP and the backhaul devices can operate a respective ACS procedure to select a channel for servicing non-AP STA end-user devices. However, the channel might also be used for the backhaul to convey uplink and downlink loads. There is, however, an accumulation of load traffic toward the start of the wireless backhaul, which can lead to more dropped traffic toward the HGW end of the backhaul.

Another challenge is that noise can, and generally does, affect the operation of the wireless backhaul links. This noise can affect wireless backhaul devices in one of two ways. One way, affecting backhaul devices receiving uplink traffic and/or downlink backhaul traffic, is that a transmission from other AP STAs and/or from non-AP STAs serviced by a different AP STA may interfere with a transmission from a STA serviced by the backhaul device. The interference can result in a misinterpretation of, and failure to receive, a packet from the STA, leading to an air packet error rate (air PER). Packets that are not correctly received must then be retransmitted.

The other way affects the ability of the first AP and backhaul devices to transmit a load. Specifically, to transmit a load an AP must have its Received Signal Strength Indication (RSSI) below a clear channel assessment (CCA) threshold. If the noise at an AP is greater than the threshold, the AP delays the transmission to allow a period of time for completion of the transmission by the noise source before the AP re-attempts its load transmission. In other words the transmission medium is time-shared between the noise source and the load transmission.

Currently wireless backhaul can be based on a 2.4GHz based on IEEE 802.11n/ax; a 5GHz based IEEE 802.11ac/ax; or a 60 GHz based IEEE 802.11ad/ay, but other bands and IEEE 802.11 protocol flavors are expected to support wireless backhaul in the future.

US9271153 relates to adaptive network configuration. US9642040 relates to load balancing in a wireless network with multiple access points.

SUMMARY

It is an object of the present invention to provide an apparatus, a system, a computer program product, and a method for implementing ACS for a plurality of node devices of a WLAN.

Various aspects of the present disclosure have been defined in the independent claims. Further technical features of each of these aspects have been defined in the respective dependent claims.

The foregoing and other objects are achieved by the features of the independent claims. Further implementation forms are apparent from the dependent claims, the description and the figures.

In a first aspect of the present invention there is provided a device for implementing ACS in a WLAN. The device comprises at least one processor configured to receive a plurality of network operational data sets corresponding to at least two node devices of a plurality of node devices of the WLAN. The at least one processor is further configured to select, based on the operational data sets, for each link of a plurality of wireless links of the WLAN that are connected in series and collectively include at least one wireless backhaul link that connects the at least two node devices, a communication channel for operating the wireless link from a plurality of communication channels. The at least one processor is further configured to instruct transmission of channel identification data to operate the selection for each wireless link.

Thus, there may be traffic coordination between different APs operating in a backhaul.

The links are connected as a chain and the channels are selected based on end-to-end performance. The end-to-end performance may be a measure of performance from one end of the chain to another end of the chain. This offers an improved or at least an alternative methodology of channel selection compared with existing wireless backhaul systems in which performance is only considered based on local needs at each AP, rather than by an end-to-end metric. In some embodiments, end-to-end performance is evaluated as at the performance from a first end of the chain to a node within the chain, wherein the first end of the chain to the node within the chain comprises at least one backhaul link.

The plurality of communication channels comprises at least a set of primary communication channels and a set of secondary communication channels, wherein each primary channel has a unique frequency range and the unique frequency range of each primary communication channels corresponds to a combined frequency range of two or more secondary communication channels;

wherein when a first primary communication channel is determined to be busy, the device is configured to:

evaluate each secondary communication channel corresponding to the first primary communication channel for selection as the communication for operating the wireless link.

In some embodiments the device is one of said at least two node devices.

In some embodiments, the selection comprises determining end-to-end performance for each of a plurality of different permutations of channel selections for each of the wireless links, and selecting a permutation corresponding to a determined end-to-end performance. In this way different channels a variety of permutations can be test to find an optimal solution.

In some embodiments, for each of the plurality of different permutations of channel selections performance is determined based on measurements of link-level performance respectively corresponding each of the at least one wireless backhaul links. In this way, end effect of each backhaul link channel selection can be taken into account and optimized with respect to the end-to-end performance.

In some embodiments, each measurement of link-level performance is based on a measurement of channel usage for the corresponding wireless backhaul link. This sets up the channel selection for an optimization based on utilization.

In some embodiments, the end-to-end performance is a measurement of data loss. Selecting channels based on data-loss contrasts with other potential metrics, such as individual user-based metrics, which may for example be geared toward distributing a fixed amount of data per user, with evenly distributed access to the various users. Data loss based selection, and indeed end-to-end performance based selection generally, enables a larger picture performance to be taken into account. This can be especially beneficial in implementations where even distribution of network access is not the goal, or at least not the only goal, of the network.

In some embodiments, the selection is based on measurements of channel usage corresponding to each of the at least one wireless backhaul links, each measurement of channel usage correspond to one of the wireless backhaul links, wherein the measurement of channel usage for the backhaul link is determined based on a calculated load through the wireless backhaul link and an estimated effect of noise on utilization of the wireless backhaul link. Thus the selection may enable the effect of noise to known, controlled and/or mitigated.

In some embodiments, the at least one processor is configured to determine the measurement of channel usage for the corresponding wireless backhaul link. The determination of the measurement comprises calculating a first required channel usage to transmit a load demand comprising a first required load in a first direction that is from a first node device at a first end of the backhaul link to a second node device at a second end of the backhaul link. The calculation of the first required channel usage is based on a function of usage parameters. The usage parameters comprise an amount of channel usage required to transmit the first required load, without interference from noise, from the first node device to the second node device. The usage parameters also comprise and at least one of: (i) an amount of channel usage required to retransmit a part of the first required load due to an air Packet Error Rate, airPER, that results from noise affecting receipt of the first required load at the second node device; and (ii) an amount of channel usage that is unavailable for transmission of the first required load due to a requirement for time-sharing of the channel that results from noise affecting transmission of the first required load by the first node device. In this way, the effect of noise on air-PER and time/or time sharing is accounted for and therefore may potentially be controlled and/or mitigated. The contrasts with prior ACS methods that do not consider receiver side noise.

In some embodiments, the performance is a measure of data loss, wherein the data loss is a difference between: (i) a required amount of load usage, being an amount of channel usage required to transmit the load demand without interference from noise; and (ii) a ratio of: the required amount of load usage; to a sum of the usage parameters. Thus, the effect that noise on data loss can be directly taken into account and therefore the impact of the noise may be controlled and/or mitigated.

In some embodiments, the at least one processor is configured to: estimate the airPER; and estimate the amount of channel usage required to retransmit a part of the load due to the estimated airPER. Thus, airPER contribution to channel usage is taken into account.

In some embodiments, the plurality of operational data sets comprises a first set of devices observable by the first node device and a second set of devices observable by the second node device. The at least one processor is further configured to: estimate the airPER is based, at least in part, on a correlation between the first set of devices and the second set of devices. By measuring the effect of airPER a more reliable measure of channel utilization and/or data loss can be determined. By contrast, in non-centralized ACS systems the contribution of airPER is unknown. In some embodiments, the at least one processor is configured to calculate the correlation. The correlation is calculated as is a ratio of (i) a number of devices in an intersection of the first set of devices and the second set of devices (ii) a number of devices in the second set of devices. It is believed by the inventors that this is an innovative strategy for determining airPER.

In some embodiments, the at least one processor is configured to: estimate the airPER according to a function having a product of: a measured busy medium duration at the second node device; and the determined correlation. Such embodiments can translate the estimated airPER to an effect on channel usage in the time domain.

In some embodiments, estimating the airPER is based, at least in part, on difference between (i) a Clear Channel Assessment, CCA, threshold level at which the measured busy medium duration at the second node device was measured; and (ii) a run-time CCA threshold level that is, at least predicted, for run-time of operation of the second node device.. Thus, air PER can be established for different CCA threshold levels.

In some embodiments, in an event that the correlation is determined less than 100%, the proportion of the busy medium duration that contributes to an air PER is determined based on the CCA threshold level at the second node device. Thus, depending on the CCA threshold level, different amounts of the medium busy duration can be attributed to air-PER. In some embodiments, in an event that the correlation is determined to 100%, the proportion of the medium duration that contributes to an air PER is determined to be negligible.

In some embodiments, the at least one processor is configured to estimate the amount of channel usage that is unavailable as a measured busy medium duration at the first node device. Thus, the effect of noise at a transmitting end of a backhaul communication can be taken into account, thereby complementing or adding to embodiments in which the effect of noise at a receiving end of a backhaul communication is taken into account, based on airPER.

In some embodiments, the at least one processor is configured to calculate data loss through the link as a sum of a first data loss in the first direction through the link and a second data in a second direction though the link, the first data loss being dependent on the first required channel usage and the second data loss being dependent on a second required channel usage, the second required channel usage comprising a second required load that is in a second direction from the second node device to the first node device. In such embodiments, the calculation of the second required channel usage is based on a function of second usage parameters. The second parameters comprise an amount of channel usage required to transmit the second required load, without interference from noise, from the second node device to the first node device. The second usage parameters further comprise at least one of: an amount of channel usage required to retransmit a part of the second required load due to an air Packet Error Rate, airPER, that results from noise affecting receipt of the second required load at the first node device; and an amount of channel usage that is unavailable for transmission of the second required load due to a requirement for time-sharing of the channel that results from noise affecting transmission of the second required load by second node device. Such embodiments advantageously take into account situations in which there is a load demand in both downlink and uplink directions.

In some embodiments, the operation data is received by the communication device over at least one of the channels.

In some embodiments, the WLAN is a Wi-Fi local area network.

In a second aspect of the present invention there is provided a method of ACS in a WLAN in accordance with the first aspect or any specific implementation manner thereof.

In a third aspect of the present invention there is provided a computer program product with a program code for performing a method of the second aspect of the present invention, when the computer program runs on a computing node in, or in communication with, the WLAN. For example the computing node may be a home gateway of the WLAN; or may be a device external to the WLAN, but in communication with the home gateway.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a conceptual drawing of a building having a plurality of exemplary ecosystems, one or more of which may operate an exemplary ACS method that is in accordance with an aspect of the present invention;

FIG. 2 is a conceptual drawing of one of the ecosystems, showing a series of links, including a backhaul link, operated in accordance with the ACS method;

FIG. 3 is a block diagram of exemplary hardware architecture, in accordance with an aspect of the present invention, for implementing the method;

FIG. 4 is a flow diagram of the method;

FIG. 5 is a swim lane diagram depicting flow of data between an ACS module for selecting channels in accordance with the method, and node devices for which the channels are selected;

FIG. 6 is a flow diagram illustrating an exemplary method for measuring an operational data set used by the method;

FIG. 7A is an exemplary busy duration histogram that can be produced from the operational data set;

FIG. 7B depicts exemplary busy histograms collated in the ACS module;

FIG. 8 is an exemplary flow diagram for selecting a permutation of channels based on end-to-end performance, in accordance with one or more embodiments of the invention;

FIG. 9A is a flow diagram illustrating an exemplary method for determining end-to-end performance of a chain topology, in accordance one or more embodiments of the present invention;

FIG. 9B is a flow diagram illustrating an exemplary method for determining end-to-end performance as end-to-end data loss, in accordance with one or more embodiments of the present invention.

FIG. 10A is a table showing a mapping of SINR to modulation coding scheme (MCS), the mapping being used in one or more embodiments of the present invention;

FIG. 10B depicts tables showing a mapping between MCS, PHY rate and MAC rate, the mapping being used in one or more embodiments of the present invention;

FIG. 11 is a flow diagram depicting an exemplary method for determining an amount of channel usage that results from an airPER affecting the link, in accordance with one or more embodiments of the present invention;

FIG. 12 is a flow diagram depicting an exemplary method for determining a percentage of a part of the airPER, in accordance with one or more embodiments of the present invention;

FIG. 13 is a series diagrams illustrating examples of sets of interferers that are correlated in various ways, the correlation being used to determine the part of the airPER, in accordance in one or more embodiments of the invention; and

FIG. 14 is a graph describing the spectral mask of a signal, as defined by IEEE 802.11, for an exemplary channel that is selected in one or more embodiments of the present invention.

DETAILED DESCRIPTION

To make the objectives, technical solutions, and advantages of this disclosure clearer, the following further describes the implementations of this disclosure in detail with reference to the accompanying drawings. The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.

The present invention, in some embodiments thereof, relates to a device and method and a computer product for Automatic Channel Selection, ACS, in a Wireless local Area Network (WLAN), and in some embodiments, more specifically a Wi-Fi network.

In general and non-limiting terms, the invention is involves receiving a plurality of network operational data sets corresponding to at least two node devices of a plurality of node devices of the WLAN. For each of a plurality of wireless links of the WLAN, the operational data sets are used to select a communication channel. The wireless links for which the selection is made are connected in series and collectively include at least one wireless backhaul link. Channel identification data is transmitted to operate the selection for each wireless link.

Backhaul nodes between neighboring links receive are thereby configured to use a selection that is centrally decided based on the collective operation of the links, i.e. how they operate as a whole, rather than individually. This is important because the channel selected for a given link can affect the operation of one or more other links. By contrast, in existing WLANs with a wireless backhaul, each backhaul node decides its operating channel for itself, without taking into account factors affecting other backhaul nodes. By centrally viewing the system, i.e. viewing it as a whole, the collective operation can be evaluated end-to-end. For example, end-to-end data loss may be optimized, tailoring the wireless backhaul WLAN according to a different performance criterion than has been used in the past, which may better suit the goals of the WLAN.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

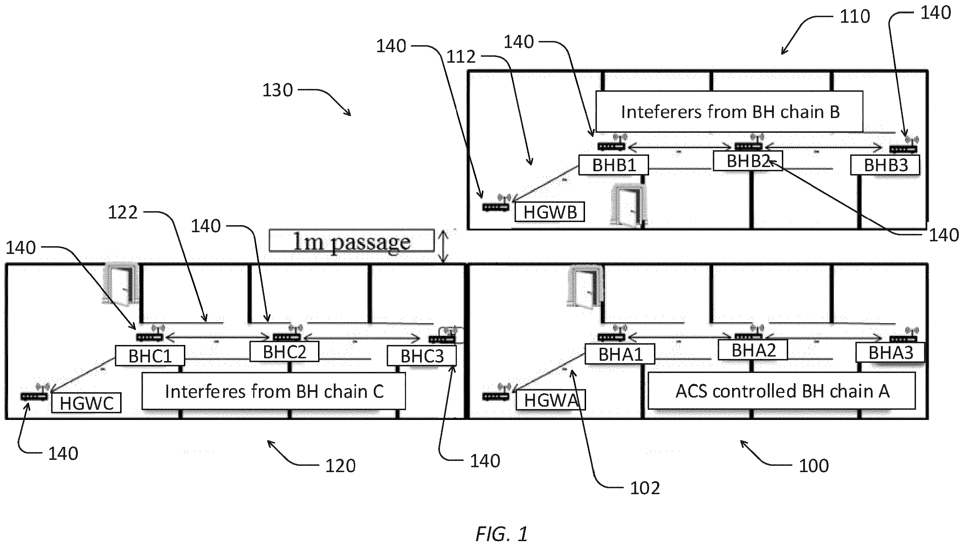

Reference is now made to FIG. 1, which shows three exemplary orthogonal distributed Wi-Fi ecosystems 100, 110, 120 in different parts of a building 130. The three ecosystems may be part of a common Local Area Network (LAN), or may alternatively form three distinct LANs. The ecosystems 100, 110, 120, have respective wireless backhauls 102, 112, 122 for servicing non-AP STAs (not shown) in each ecosystem. As will be explained, an ACS method is used optimize end-to-end performance of backhaul 102.

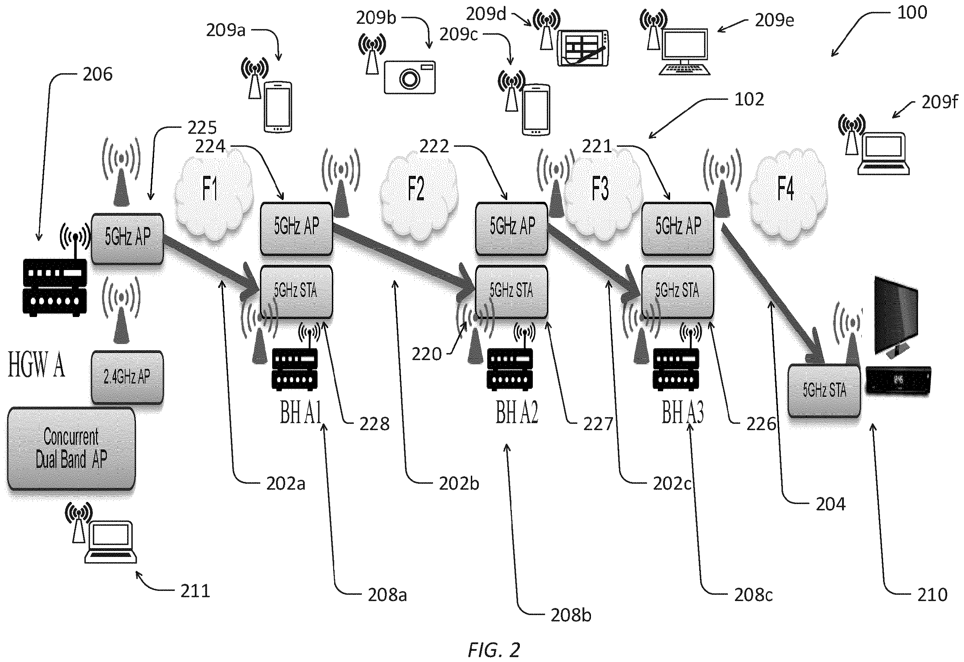

Figure 2 shows the backhaul 102 of WLAN ecosystem 100 in more detail. The backhaul 102 is formed by wireless backhaul links 202(a, b, c) that connect node devices in the form of home gateway (HGW) 206, which acts as an AP (i.e. an AP STA), and backhaul (BH) devices in the form of extenders/repeaters 208(a, b, c), each of which acts as both an AP and non-AP STA. The backhaul links 202 connect respective pairs of the node devices, whereby the node devices 206, 208a, 208b, 208c are connected end-to-end to form a chain. In the illustrated embodiment the backhaul 100 consists of a linear chain connected to the HGW 206. However, in other embodiments, other backhaul configurations are possible, e.g. multiple backhaul chains connected the HGW 206 and/or one or more backhaul branches extending from a main backhaul chain/spine.

The WLAN backhaul chain 102 services non-AP STAs 209(a-f), 210. Extender 208a services non-AP STAs 209a, extender 208b services non-AP STA 209b, 209c, 209d, and extender 208c services non-AP STAs 209e and 209f, and 210. However, non-AP STAs 209b and 209d may be heard by extenders 208a and 208c, due to a close proximity to those extenders, as well. Thus non-AP STAs 209b and 209d are could be termed 'interferers' because signals transmitted from those non-AP STAs can interfere with an AP component of an extender. Transmission from each of the backhaul AP components 221, 222, 224, 225 of the various node device 206, 208 may also interfere with backhaul AP components 221, 222, 224, 225 of the other devices 206, 208 and/or backhaul non-AP component 226, 227, 228 of the other devices 208. Each AP component is therefore termed herein as an 'interferer'. The backhaul non-AP STAs 226, 227, 228 could also be considered interferers, but carry only backhaul traffic (no local traffic), so their interference effect is less than the backhaul AP components. Hence in the embodiment described herein, they are not treated as interferers. Because of their potential for causing interference, non-AP STAs (either part of, or serviced by, a backhaul node devices 206, 208) associated backhaul 102 and APs (including stand-alone APs and AP components) associated with the backhaul 102 are more specifically termed herein 'internal interferers' to ecosystem 100 because they are internal to the ecosystem 100. While end user devices are also interferers the effects of interference are generally dominated by APs. Thus for the purpose of the disclosure herein an "interferer" is more precisely intended to mean an AP interferer, as opposed to an end user interferer.

Additionally various STAs, but especially AP STAs (in this case STA components) 140 (FIG. 1), that are part of ecosystems 110 and 120 may potentially be seen and interfere with one or more APs in ecosystem 100, and are thus also referred to herein as 'interferers', but in some instances more specifically as 'external interferers', since they are external to the ecosystem 100.

Each wireless backhaul link 202a, 202b, 202c operates over a 5GHz radio communication, on a corresponding channel F1, F2, F3, respectively. Each of the channels is selected from a plurality of possible channels, each channel having a bandwidth spanning unique frequency range amongst the plurality of different frequency ranges. For example, there may be 2 x 160 MHz channels, 6 x 80 MHz channels, 12 x 40 MHz channels, and 25 x 20 MHz channels, with each of the larger bandwidth channels spanning respective frequency ranges of two channels of the next smallest bandwidth. However, the set of available channels depends on country-specific regulations.

Each extender 208 is a dual radio device provided by two 5 GHz radio chipsets. One of the 5GHz of the radio chipsets is for communicating, as a non-AP STA, with a parent AP in the next more centrally located device (toward the HGW 206) connected the backhaul 102. The other of the 5GHz radio chipsets is for providing AP functionality, for example to communicate with the next backhaul device (away from HGW 206) and/or any non-AP STA(s) that the extender services. In other, more complicated and/or less efficient embodiments of the invention, a single 5 GHz chipset is configured to provide both the AP and non-AP STA functions of the extender.

The HGW 206 has a 5 GHz chipset for providing AP functionality, and optionally, a 2.4 GHz chipset to provide a concurrent dual band service, whereby the HGW 206 also acts as an AP for just a local service over the 2.4 GHz radio. Optionally, 2.4 GHz chipsets (not shown) may likewise be additionally included in the extenders 208.

ACS is performed by the HGW 206, or by a separate device that executes the ACS module and is in communication with the HGS 206. The ACS selects which channel is to be used for each of the backhaul links 202 to control (e.g. optimize) end-to-end performance, from one end of the backhaul chain 102, at the HGW 206, to an opposite end of the backhaul chain 102, at extender 208c. In some embodiments, the distal end of the WLAN chain managed by the ACS extends beyond the backhaul 102 to include a link 204 to one of the non-AP STAs 210 serviced by the last extender.

In embodiments described herein, the end-to-end performance that is controlled is an approximation of end-to-end data loss. Other examples of end-to-end performance that can form the basis of the ACS: average link usage (e.g. to select a topology with the lowest average link use of the medium); or minimum link usage (e.g. to select the topology that has the strongest weakest-link usage, i.e. the maximum minimum). In some embodiments, the ACS module is part of a broader function provided by a Radio Resource Management (RRM) module.

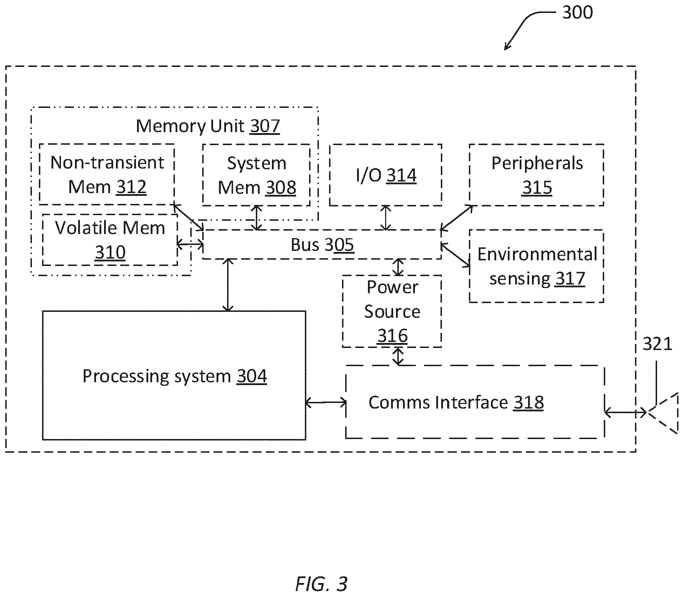

An exemplary architecture of a device 300 which can be used for any or each of the HGW 206 and backhaul devices 208 to perform an embodiment of one or more aspects of the present invention is illustrated in FIG. 3. The exemplary architecture is depicted as block diagram illustrating principal conceptual components of an exemplary device 300, and principal connections between those components, to aid a person skilled in the art in performing the invention. Components and connections that are not included in the illustration may therefore nonetheless be understood to be present by the person skilled in the art.

While the illustrated embodiment shows that the backhaul 100 is provided by an HGW 206 being connected to extenders 208, the functions of these devices 206, 208 may, in other embodiments, be provided by any suitably equipped network-enabled computing device. Thus the device 300 may include any necessary computer hardware that would be understood by the person skilled in the art to needed to perform the functions of the above listed any other possible types of computing nodes. In the illustrated embodiment, the device 300 has a processing system 304 having one or more processors (execution devices). The processing system 304 communicates data with at least one computer readable storage medium in the form of memory 307, via a communication bus 305. The memory 307 has a system memory 308, a volatile memory 310 and a tangible, non-transient memory 312. The system memory may have a read only memory (ROM) that stores a basic input/output system (BIOS). The volatile memory may have a random access memory (RAM), such as dynamic random access memory (DRAM). The non-transient memory 312 may have a hard disk drive(s), a solid state drive(s), and/or a flash memory device(s) and the like, and may store an operating system (e.g. Microsoft Windows, Apple OSX, Unix, and Linux) and/or other program products for running for operating device 300. The computer readable storage medium for providing the non-transient memory 312 may be, for example, but is not limited to, an electronic storage device, a magnetic storage device, an optical storage device, an electromagnetic storage device, a semiconductor storage device, or any suitable combination of the foregoing.

The processing system 304 includes a microprocessor that performs tasks by executing software in the form of instructions and data stored on, and read from, the system, volatile, and/or non-transitory memory 308, 310, and 312. For example, tasks for performing embodiments of the present invention can be provided in instructions stored in the non-transient memory 312. Thus in come embodiments, the processing system 304 comprises electronic circuitry including, for example, programmable logic circuitry, field-programmable gate arrays (FPGA), or programmable logic arrays (PLA) that execute a computer readable program instructions by utilizing state information of the computer readable program instructions to personalize the electronic circuitry, in order to perform one or more aspects of the present invention.

However, in some embodiments, the tasks of the microprocessor are performed by a microcontroller having transient and non-transient memory included therein.

The tasks performed by the processing system can be some or all of the tasks that form various aspects of the present invention. The instructions are, at least upon powering up the device 300, stored in the non-transient memory 312 or an external data storage device accessed by the computer processing system 304 via an I/O interface 314. However, in other embodiments the tasks for performing the present invention are executed by an application-specific integrated circuit (ASIC) chip. In any case embodiments, the processing system may be comprised of plurality of processing devices.

In some embodiments, the software may be provided to computer processing system 304 via a wired or wireless communication over a communications interface 318, which provides a network interface. Thus as will be appreciated, computer readable program instructions described herein may be downloaded to respective computing/processing devices from a computer readable storage medium or to an external computer or external storage device via a network, for example, a wireless local area network (e.g. Wi-Fi), a wide area network (e.g. the Internet), and/or a cellular network, e.g. Long-Term Evolution (LTE). The communications interface 318 may have additional communications connections, including but not limited to, BlueTooth, ZigBee, and 3G etc. Each of the communications connections sends and receives signals via antenna module 321, which may be single antenna, or a series of antennas for providing beamforming, and/or can include a plurality of antenna submodules for a respective plurality of radio chipsets. In the exemplary embodiment described herein, the communications interface 318 in any case includes 2 WLAN transceivers (each being 5 GHz) to provide the dual radio functionality. In some versions of this embodiment, the end-user devices 209, 211 may be serviced by an additional 2.4 GHz local service radio include in the communications interface, which can be used to mitigate/avoid interference between devices 209, 211 and the backhaul. Each of the WLAN transceivers, is in some embodiments a Wi-Fi transceiver operating any one or more flavors of IEEE standard 802.11, e.g., 802.11an/ac/ax or a future 802.11 protocol. Each WLAN transceiver provides at least a front end that receives instructions the processing system 304 and based on the instructions drives a transmission on the antenna module 321. The front end also converts RF signals received, on antenna module 321, to digital signals that are then communicated to the processing system 304. In accordance with Wi-Fi, the communications interface 318 includes a carrier sense function, whereby it does not initiate a new transmission session, operation (e.g. a transmission opportunity period, as defined in IEEE 802.11ax).if an RSSI is above a Clear Channel Assessment (CCA) threshold. Optionally, communications interface 318 is included in the processing system 304. In any case, the processing system 304, with an integral or separate communications interface 318, is adapted to provided processing components of an AP, in the case of HGW 206, and of both an AP and non-AP STA, in case of the extenders 208. In the case of the extenders 208 having two 5 GHz radio systems facilitates operating an uplink on a different channel to the downlink link, which is generally advantageous, but not mandatory.

In addition to the functions described above, the device 300 may have a variety of other hardware elements, particularly given that, in some embodiments device 300 is any suitably network-enabled computing device (e.g. a desktop computer, a laptop, router, etc.). For example I/O interface 314 may include one or more of a speaker, microphone, keypad, display/touchscreen etc., which may be integrally incorporated into the device. Additionally the device may include a peripherals interface 315 to connect with one or more ancillary devices such as a mouse, keyboard, monitor, scanner, projector, digital camera etc. An environmental sensing system 317 may also be included to provide for example, temperature sensing, or a global positioning system or to measure any other condition of the device's environment. The device may also include an internal power source 316, such as a battery, which may be a rechargeable battery.

As will be described herein in more detail, the channel selection is made based on a plurality of network operational data sets from respective node devices of the plurality of node devices 206, 208, and is communicated, as channel identification data that collectively forms a channel map, over the backhaul links 202 to each of the extenders 208 and, if the map is derived on an ACS module that is not the HGW 206, the map is also communicated to the HGW 206. The channel map is included in a WLAN frame and received firstly by node device 206 or 208a (depending on whether the ACS module is included in the HGW 206), and a copy is passed on to the next node device 208a or 208b, and so on until, it is received by all of the backhaul devices 208. The channel map identifies which channel to use to communicate over the backhaul links 202 (and in some embodiments, link 204, as has been discussed).Upon receiving the channel, each node device 206, 208 identifies a part of the map that applies to it, based on an identification tag that is linked to the MAC address of that part of the map. In other embodiments, only a part of the channel map/channel identification data relevant to a given node device 206/208 is transmitted to that device, with different parts being transmitted to the different devices 206, 208. In any case, upon receiving/determining the relevant part of the channel map/channel identification data the node device configures a MAC portion of its communications interface 318 to command PHY layer to use the designated channel when communicating over the relevant link.

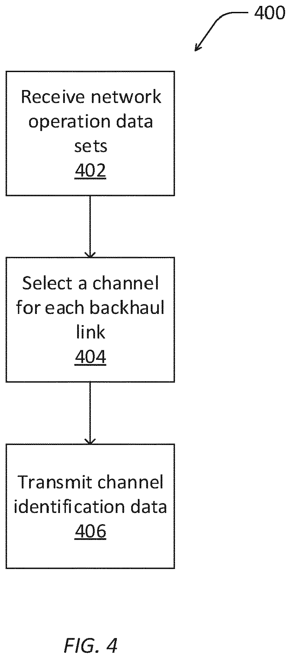

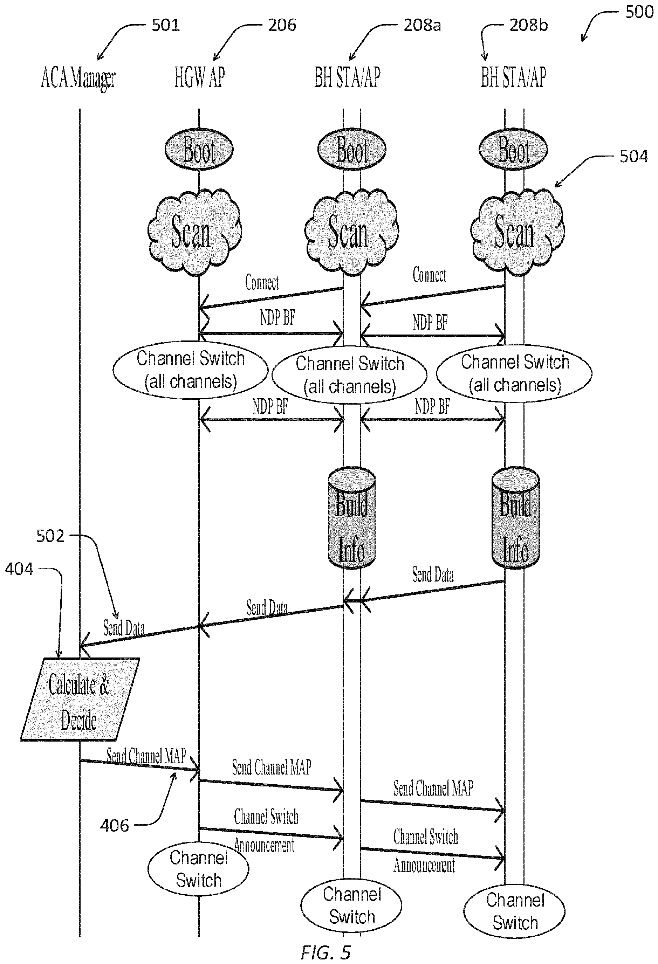

An exemplary method 400 for performing one or more aspects of the present invention, for example on the HGW 206, is depicted in FIG. 4. At step 402, the HGW 206 receives operational data sets from the respective extenders 208. Based on the operational data sets, the HGW 206 selects a channel for each backhaul link at step 404 and transmits the channel map at step 406. An exemplary data flow 500, as a swim lane diagram, between the HGW 206 and the extenders 208, including exchange of the operational data sets and the channel map is illustrated in FIG. 5. Figure 5, refers to an ACS module 501 which receives operational data 502 from the AP component of the HGW 206. In some embodiments the ACS module 501 is a set of tasks executed by the processing system 304 of the HGW 206. As will be appreciated the set of tasks may be provided by a software module and/or by a specialized processing device(s) such as an FPGA, PLC, microcontroller and/or ASIC chip. During execution the processing system 304 can retrieve the operational data 502 from memory unit 307. In other embodiments the ACS module 501 is executed on a separate device which is in wired or wireless communication with the HGW 206. In such embodiments the ACS module can likewise have the architecture as the device 300. However, for embodiments described herein the ACS module is a set of tasks executed by the processing system 304 of the HGW 206.

The operational data 502 is generated by the HGW 206, and each of the extenders 208, during booting. When booting at step 504 each device 206, 208 performs a scan to measure, for a variety of different CCA threshold levels: noise floor, and medium busy durations (representing a percentage of time the received signal level is above the CCA threshold). In the exemplary embodiment, the busy durations are determined for the 20 MHz channels, and when operating ACS based on 40 MHz and/or 80 MHz channels, the busy duration for those channels are taken to be the maximum busy duration of all the 20 MHz channels within the frequency range of the 40 or 80 MHz channel. The scan is performed for each of the possible channels on which the device 206, 208 may operate.

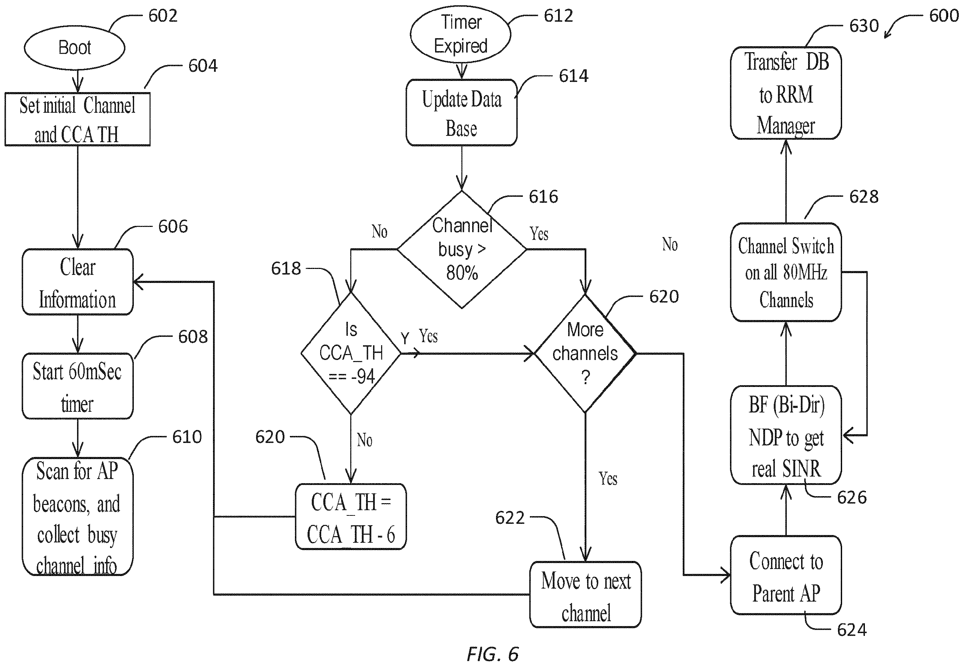

An exemplary scan procedure 600 for deriving operational data at a given device 206, 208 is illustrated in FIG. 6. At step 602 the device is booted. At step 604 an initial one of the channels is selected and an initial CCA threshold, e.g. -70dB. Registers that store a previously recorded channel data are cleared at step 606. At step 608 a timer, e.g. a 60 second timer, is started. While the timer has not expired, at step 610, the device scans for AP beacons to determine an AP interferer list (internal and external), and determines busy channel duration.

Upon expiry of the timer, at step 612, a database is updated, at step 614, with a new entry defining the medium busy duration for the CCA threshold and channel. At step 616, the device checks whether the medium busy duration is greater than a threshold, e.g. 80%. If it is not, then at step 618 the device checks whether the CCA threshold is greater than a minimum threshold, e.g. -94dB. If it is not, then the CCA threshold is decreased by a known amount, e.g. 6dB, at step 620, and steps 606 to 610 are repeated for that CCA threshold. However if/when then CCA threshold is less than or equal to the minimum possible CCA threshold (-94 dB), the checks, at 620, whether there are more channels to scan. The device also moves to step 620 if the medium busy duration is greater than equal to the defined threshold at step 616. If there are more channels to test that at step 622 the CCA level is reset to the initial value, the next channel is selected and steps 606 to 620 are repeated.

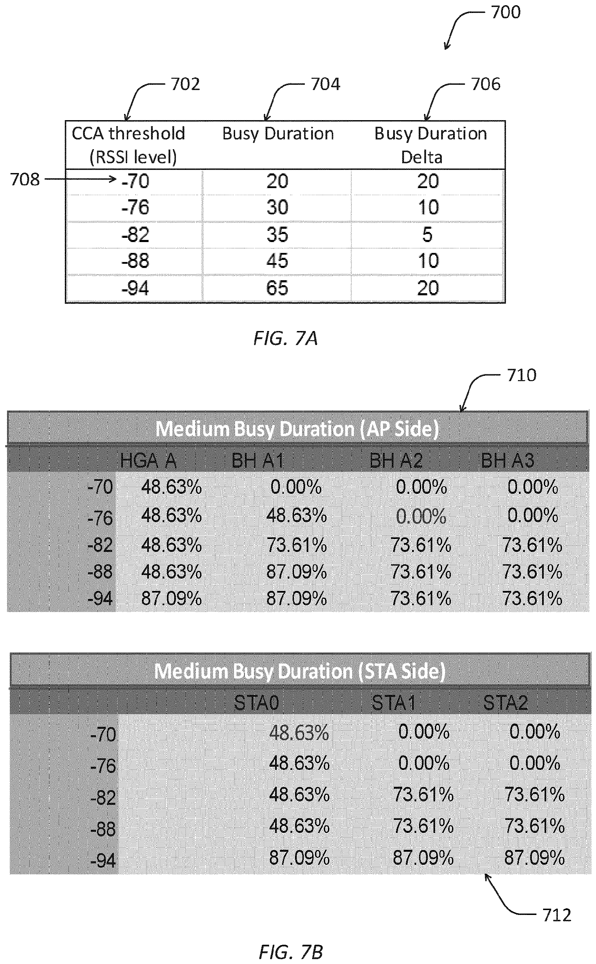

The collection of busy durations for a given link, as recorded by a given device 206, 208, is representable as a set of histograms, with the histograms characterizing the respective channels of that link. FIG. 7A shows an exemplary histogram 700 within such a set of histograms. The histogram 700 shows for each CCA threshold 702, the measured busy duration 704. The histogram 700 also includes a busy duration delta 706 column, which is the difference between the measured busy duration at the relevant CCA threshold and the measured busy duration at the immediately higher CCA threshold. In the case of the highest threshold 708, the busy duration delta is the same as the measured busy duration. The values of the CCA threshold in the histogram are also treated herein RSSI levels, because the busy duration measurements are reflective of the minimum RSSI level for causing the busy signal, and the busy duration delta values indicate the contribution of the busy duration that results from the corresponding RSSI level.

Once all channels have been measured/characterized, the device connects to its parent AP at step 624 to determine a PHY rate through the link to the parent AP. The PHY rate may be established in any number of known ways. For example, it may be determined from the signal to interference and noise ratio (SINR) level for the link as measured by the receiver side. Thus, at step 626 the device performs a beamforming (bi-directional) null data packet (NDP) exchange with its parent device to determine a real (measured) SINR for a selected one of the 80 MHz channels. At step 628 the channel is switched and the SINR is measured for that channel, until the SINRs have been measured for all of the possible 80 MHz channels.

At step 630 an operational data set consisting of the each channel's SINR to each of the AP interferers, and the busy durations at the respective CCA thresholds for each channel is transmitted to the parent AP for use by the ACS module. The above procedure explains the collection of operational data sets for the downlink communication path (away from HGW 206). However, in some embodiments, operational data is also collected for the uplink communication path (towards the HGW 206). In this case the SINR is determined with respect to the adjacent distally located computing node 208 or 210, and the operational data set is then transmitted to the more central (less distally located) AP, or in the case of HGW 206 it is stored in memory for later recall by the ACS module 501.

For both uplink and downlink directions the SINRs are recorded to and from each of the other node devices 206, 208 associated with the backhaul 102. As will be explained, these SINRs are used to determine the MCS for each backhaul link, which, is in turn used in calculating channel usage.

Returning to FIGS. 4 and 5, once all the operational data sets have received by the HGW 206 it stores each of the operational data sets to memory unit 307. From the operational data sets, medium busy duration histograms, like histogram 700, may be established for each measured channel of the backhaul links 202. FIG. 7B shows exemplary medium histograms for a given channel, showing the all of the measured medium busy durations for backhaul links 202. Histogram 710 depicts the busy medium duration measurements, which is noise, taken by the AP components of the backhaul 102, being respectively derived from devices 206, 208a, 208b, and 208c. Histogram 712 depicts the busy medium duration measurements (noise) taken by the non-AP components of the backhaul 102, being respectively derived from devices 208a, 208b, and 208c. The medium busy duration histograms may thus also be termed "noise histograms".

Once the data operational data sets have been stored, the processing system 304 of the HGW 206 reads the operational data, and at step 404 determines the channel identification data that makes up the channel map, and transmits channel identification data at step 406 to each of the extenders 208. It will be appreciated that in embodiments in which the ACS module 501 is a separate device the HGW channel identification is transmitted to the HGW 206 and each of the extenders 208. In other WLAN ecosystems in which the ACS module 501 is integral the HGW 206 and there is only one extender 208a, there may be only one backhaul link and one link to an end user device 210. The channel map is therefore smaller in such ecosystems, but transmitted channel identification data still includes at least a channel selection for the most distal link (being the link furthest from the HGW), in this case being the link from the extender to the end user device 210. In embodiments involving multiple extenders, such as in FIG. 2, the last (most distal) link for which a channel is selected may be the backhaul link 202c between the final extender 208c and the penultimate extender 208b. In other embodiments, link 204 between the final extender and a user device 210 is included in the channel selection by the ACS module 501. In some ecosystems, however, there may be other user devices 209e and 209f also connected to the final extender 208c, in which case the link 204 that undergoes channel selection by the ACS module 501 could potentially be to any of devices 209e, 209f or 210. The device to which link 204 applies may be either randomly selected, or selected based on some performance, e.g. based on the relative load of the various user devices serviced by the last extender 208c.

Automatic Channel Selection

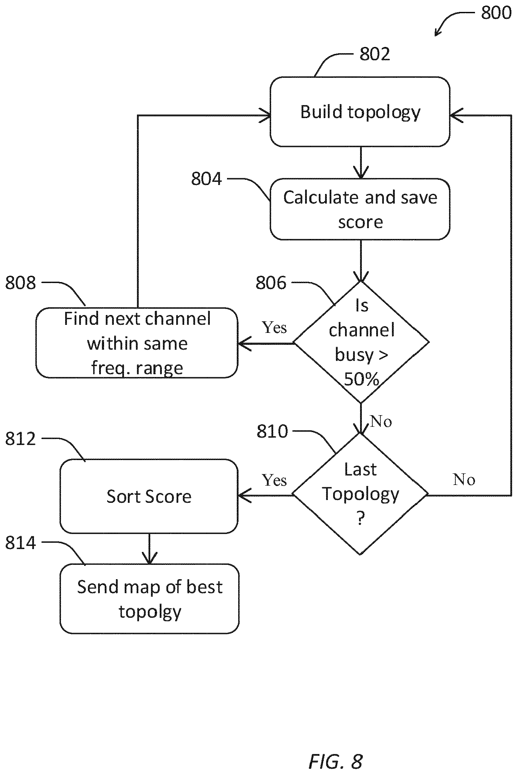

FIG. 8 shows a flow diagram depicting an exemplary ACS method 800 executed by processing system 304, according to an aspect of the present invention. By method 800, a plurality of different topologies are evaluated, and a topology corresponding to a determined best end-to end performance is selected. Each of the evaluated topologies has different a permutation of channel selections for each of the wireless backhaul links. The exemplary embodiment will now be described in respect of a case each link in the evaluated chain may be any one of six possible primary channels, each of which have an 80 MHz bandwidth. However, in other embodiments, different channel bandwidths and/or quantity of primary channels may be made available for election, Optionally, as will be explained, secondary channels within the same frequency range of the primary channel (e.g. two 40 MHz channels within a given 80 MHz channel) are also evaluated if the primary channel is has a busy duration of more than a given threshold (e.g. 50%), as in such instances improved performance might be provided by narrowing the bandwidth. This is because an interferer may be operating on part of the 80 MHz channel, but not occupying the whole channel.

Method 800 starts with a first topology being built at step 802, i.e. a starting permutation is selected. Once a given topology has been built, end-to-end performance of the topology is evaluated at step 804, ending with a performance score being saved to memory 307. At step 806, the processing system 304 tests whether the channels busy duration for any one or more of the channels in the topology is greater than the given threshold, in this example 50%. If so, a first 40 MHz channel within the frequency range of each 80 MHz channel over the threshold is found at step 808, and the process proceed back to step 802, building a second topology in which each 80 MHz channel is replaced by a corresponding first 40 MHz channel. The score calculation and storage step 804 is repeated for the second topology, and if the/each first 40 MHz channel has a busy duration more than the given 50% threshold, then the third topology is built and scored with the other 40 MHz channel within the corresponding 80MHz channel. If at any stage the channel busy duration is less than the 50% threshold, or if both secondary channels have been scored, then at step 810 the processor checks whether there are more permutations of the six 80 MHz channels for which topologies are yet to be scored, and if so the process is repeated from step 802 with the new topology. Once all topologies have been tested, then at step 812, the scores are sorted to identify a highest ranked score, which in some embodiments is a minimum end-to-end data loss. At step 814 a map defining the topology that produced the highest-ranked score is employed by HGW 206 to select the relevant channel for use by the AP component of the HGW for backhaul link 202a.

In the case of scoring end-to-end data loss, if two or more topologies have the best score, such as the lowest amount of data loss, processing system 304 selects the topology in which the minimum usage of any one link 202, 204 is the most. For example, if a first topology has usages of 150%, 110%, 70% and 90% for the respective links, and a second topology has 160%, 100%, 85% and 85%, for the same links, respectively, then the second topology is selected.

The selected topology is then transmitted to each of the backhaul devices 208 for implementing the channels selections for their respective AP components.

Determining performance of a link

As discussed above, step 804 of process 800 involves scoring the end-to-end performance of a given topology of the chain consisting of, or comprising, the backhaul links 202. Determining the end-to-end performance involves scoring each of the individual links of the chain and combining, e.g. by summing the individual scores.

The data loss is dependent on the load demand through the chain and the load demand generally consists of a first required load for downlink communication and a second required load demand for uplink communication. However, the downlink resources are determined separately, to allow for WLAN systems in which the amount of resources available for downlink communications and uplink communications is predetermined, as typically 90% of the resources are allocated for downlink and 10% for uplink. Once the dropped traffic for the downlink and uplink are determined they can be summed to determine the overall dropped traffic for the link. However, in some applications, either downlink or uplink communication may be very small and have a negligible risk of dropped traffic. For such applications, some embodiments of the invention only compute end-to-end data loss for one of either the uplink or downlink directions, as appropriate.

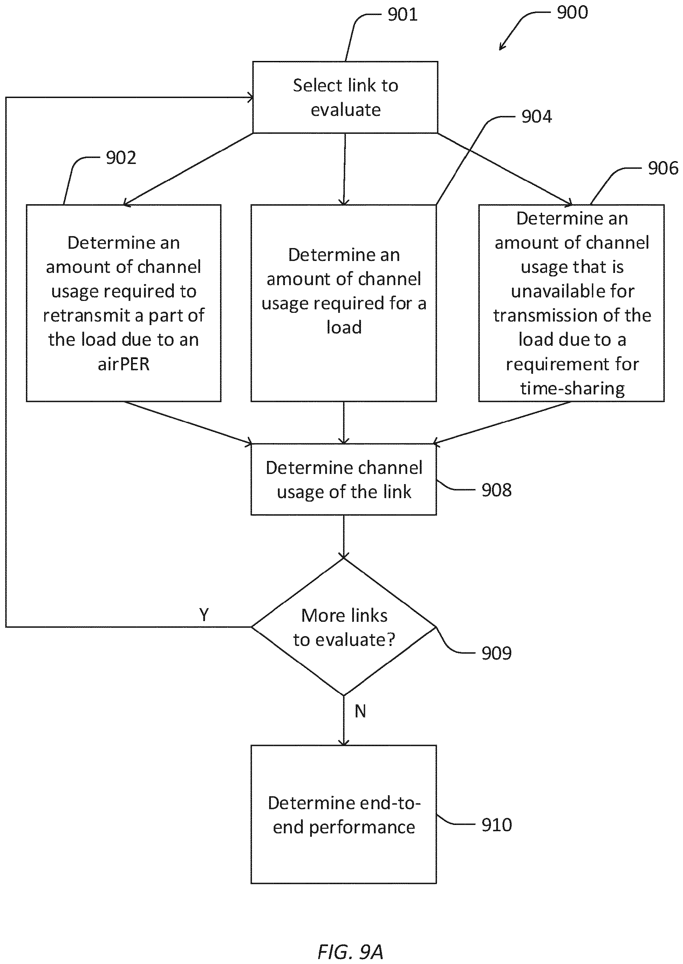

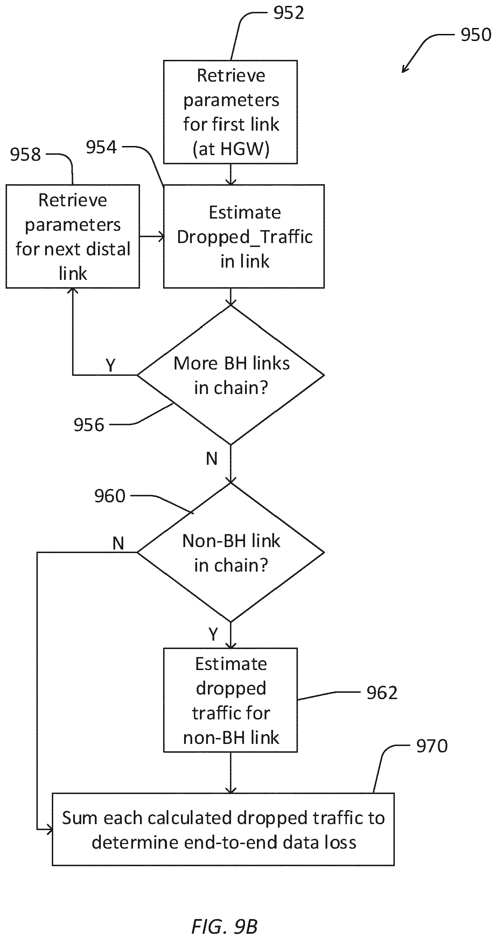

FIG. 9 illustrates flow diagram of an exemplary process 900 by which the usage of each link in a given topology is calculated and the end-to-end performance is scored for step 804. The process 900 is performed for both downlink and uplink directions for the given topology to determine the end-to-end dropped traffic score. The process firstly estimates usage of each link in the topology, via steps 901 to 909, and then at step 910, determines a score which is an estimate of the dropped traffic (either uplink or downlink, whichever the case may be). Firstly, at step 901 a link in the topology, e.g. link 202a, is selected for calculating a "usage" for the link. The "usage", as referred to in the exemplified embodiment, is treated as a percentage of time needed for the usage, but similarly may be considered as a percentage of the available backhaul link resources needed by the usage.

At step 902 the processing system 304 calculates a channel usage required by a load demand. The required load demand's usage is calculated as the percentage of the link's resources required for the load demand. It represents an amount of channel usage required to transmit the load demand without interference from noise.

In step 904, the processing system 304 determines an amount of channel usage required to retransmit a part of the required load demand due to an airPER. The airPER results from noise, at a receiving end of the link, which adversely affects the ability of the receiver to correctly receive the required load demand without error.

At step 906 the processing system 304 calculates an amount of channel usage that is unavailable for transmission of the required load demand due to a requirement for time-sharing of the channel. The requirement for time sharing results from noise that adversely affects a transmitter attempting to transmit the required load to the receiver. The amount of time that the channel is unavailable for the transmission is equal to the medium busy duration for that transmitter, which was measured in step 610, during booting. Medium busy durations were measured for a number of different CCA threshold levels.

Ultimately, during use (run-time), the CCA threshold is controlled locally at the associated device node 206, 208, rather than by the ACS module 501. However, it is common for the CCA threshold level to be at -88dB, so such a level is, in some embodiments, assumed (predicted) by the ACS module 502 to be the operating CCA threshold level of the node device 206, 208, even if the actual operating level during run-time turns out to be different CCA. However, during booting other values of the CCA threshold are used in order to establish the medium busy duration measurements.

At step 908 the processing system 304 determines the uplink and downlink channel usages of the link, using Equations 4 and 5 included herein. The channel usage is determined to be the sum of the usages determined in steps 902, 904 and 906. Thus the determined channel usage for a given link, n, in either the uplink or downlink direction, is determined as:

Equation 1:

$$Channel\_Usage = required\_load\_usage + retransmission\_usage + time\_sharing\_usage$$

At step 909 the processing system 304 determines whether there are more links in the topology for which channel usage is yet to be calculated. If so, the next link is process returns to 901 with the next link in the topology. Once the channel usage of each link has been calculated, the process proceeds to determine end-to-end performance at step 910.

Determining End-to-End Performance

An exemplary process 950 for determining end-to-end performance in step 910 is depicted in FIG. 9B, which shows an exemplary process for estimating end-to-end data loss. At step 910 the data loss in the backhaul link (including both uplink and downlink data loss) is determined for the calculated channel usage (including both uplink and downlink channel usage).

The channel usage means the amount of resources needed. Thus, if the calculated channel usage is less than or equal to 100%, then it is determined that there is no data dropped (i.e. no data loss). However, if the calculated channel usage is greater than 100% then the amount of traffic that is dropped traffic, in Mbps, from a given a given link, n, is determined as follows:

Equation 2:

$$Dropped\_Traffic_n = BH\_Throughput_n - BH\_Goodput_n,$$

where:

if $BH\_Goodput_n \geq BH\ Throughput_n$, then $Dropped\_Traffic_n = 0$.

and where:

Equation 3:

$$BH\_Goodput_n = BH\_Throughput_n *( 100[\%] \div (Channel\_Usage_n[\%] )),$$

where:

Equation 3a:

$$\text{BH\_Throughput}_n = (1+\text{uplink\_ratio}) * \text{BH\_Goodput}_{n-1} * \{ \text{BH\_downlink\_traffic}_{n-1} \div (\text{BH\_downlink\_traffic}_{n-1} + \text{local\_downlink\_traffic}_{n-1} ) \}$$

For initial condition for n=0 (the BH link connected to the HGW), BH Throughput$_0$ = system throughput requirement at the HGW, eg AP, 206
and

uplink ratio is the ratio of the uplink traffic through the link n to the overall traffic through the link n, which in some embodiments is assumed to be 0.1 (i.e. 10%)
and

the system throughput requirement is the throughput that the HGW is asked to pass into and out of the backhaul, which can either be measured or predefined.

Process 950 is now described with respect to the exemplary environment in FIG. 2. At step 952 processing system 304 retrieves the relevant parameters for the first link 202a of the BH for calculating dropped traffic according to Equations 2 and 3, above. At step 954 the dropped traffic is calculated for link 202a. At step 956 the processor 304 determines whether there are more BH link in the topology. Since the topology includes BH link 202b, the relevant parameters are retrieved from memory, at step 958, and determines dropped traffic according to Equations 2, 3 and 3a. Since there is yet another BH link, the processing system will then determine dropped traffic according to Equations 2, 3 and 3a for link 202c. Once dropped traffic for link 202c has been estimated, then if there are no non-BH links to determine dropped traffic for then no more downlink dropped traffic calculations are performed. However, as previously discussed, a non-BH link, such as link 204, may optionally be included in the calculation of end-to-end performance, and if so, dropped traffic is determined for link 204 at step 962 using equations using Equations 2, 3 and 3a.

Channel Usage in Equation 3 is as determined in Equation 1, and therefore depends on retransmission_usage. As will be described below, retransmission_usage for a given link is a function of noise at the non-AP side of the link. For links 202 the noise at the non-AP side is determined by a measured noise histogram measured using the BH device at the non-AP side. However, for link 204, the device 210 at the non-AP side does not measure and communication a noise histogram, so for non-BH link 204, rather than estimating retransmission usage from the measured noise, retransmission_usage is taken to be a fixed value, e.g. of 15%, representative of a common level of retransmission usage.

Determining required load usage

The required load usage parameter in Equation 1 for a given link, n, consists of: a first required channel usage to transmit a load demand that is a first required load to be transmitted in a downlink direction though the relevant link; plus a second required channel usage to transmit a second required load to be transmitted in an uplink direction though the relevant link. The first required load consists of a downlink traffic load component (BH_downlink_traffic) and a local downlink traffic component (local_downlink_traffic) to service local non-AP STAs (e.g. the end-user devices 209 serviced by a given AP component associated with the backhaul). The second required load is taken to be equal to the uplink ratio multiplied by the first required load. In some embodiments, required_load_usage$_n$ is calculated as follows:

Equation 4:

$$\text{Required\_load\_usage}_n = \text{BH\_downlink\_traffic\_usage}_n + \text{local\_downlink\_traffic\_usage}_n + \text{required\_load\_usage\_uplink}_n$$

where:

Equation 4A:

$$\text{BH\_downlink\_traffic\_usage}_n = \text{BH\_downlink\_traffic}_n \div \text{backhaul\_MAC\_rate}_n;$$

and

Equation 4B:

$$\text{local\_downlink\_traffic\_usage}_n = \text{local\_downlink\_traffic}_n \div \text{local\_MAC\_rate}_n,$$

where local_downlink_traffic is the local downlink traffic serviced by the AP at the distal end of link n.
and

Equation 4C:

$$\text{BH\_downlink\_traffic}_n = \text{BH\_downlink\_traffic}_{n+1} + \text{local\_downlink\_traffic}_{n+1}$$

In implementation in which the local traffic load (local_downlink_traffic$_n$) is unknown for each local AP, a default value (e.g. 300Mb) can be used for the local traffic load.
and

Equation 5:

$$\text{required\_load\_usage\_uplink}_n = (\text{BH\_downlink\_traffic\_usage}_n + \text{local\_downlink\_traffic\_usage}_n)*10\%$$

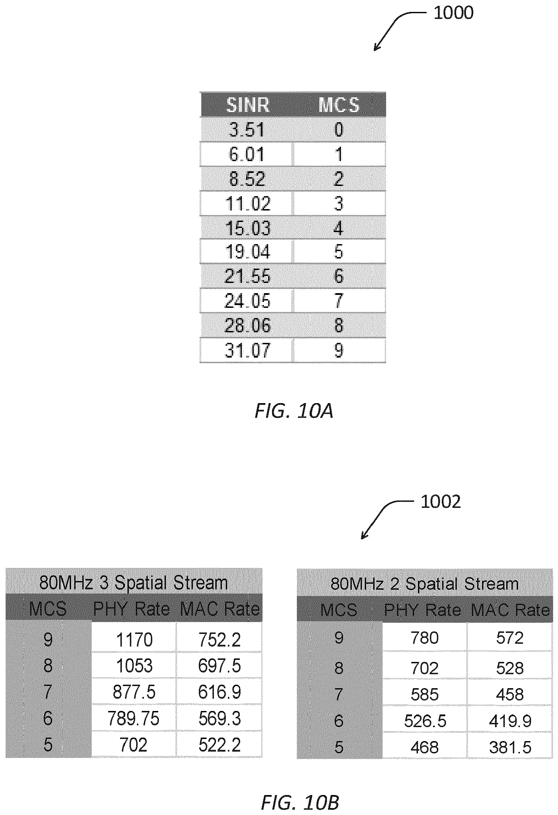

Equation 5 is based on an assumption that uplink traffic is about 10% of downlink traffic, but in embodiments where the ratio of uplink to downlink load traffic is expected to be a different percentage, the uplink load calculation is calculated based on the different percentage.
In equation 4 link n may be, for example, link 202a, in which case link n+1 is link 202b, and the local downlink traffic is the downlink traffic served by AP 224. As will be appreciated, when calculating Equation 4 for the last most distal link backhaul in the chain (e.g. link 202c), the value of BH_downlink_traffic_usage$_n$ for link$_{n+1}$ is zero.
The above equations assume the same MAC rate in each link, but can be readily modified as would be understood by a person skilled in the art, to allow for different MAC rates in different links, if needed.
The MAC rates in the above equation are determined from the relevant SINR measurements recorded during in step 626, at booting. However, 3dB is firstly subtracted from the measured SINR as a safety factor (fade margin). The new value of SINR (i.e. measured SINR - 3dB) is used to find a maximum MCS index and maximum PHY rate using the conversion table 1000 in FIG. 10.
For example, for a measured SINR of 21dB,

a new SINR is taken as 21 - 3 = 8 dB, and thus:

maximum MCS = MCS 5.

MCS5 operating at 80 MHz and 3 spatial streams results in a maximum PHY rate of 702Mbps.
The MAC rate is then determined from the PHY rate, taking into account the Maximum Transmission Unit (MTU) and aggregation size. For the purposes of the score calculation, it is in some embodiments, assumed that aggregation size is 32 and MTU is 1500. FIG. 10B shows conversion tables 1002 for 2 and 3 spatial stream transmissions. For the example above, using the table 3 spatial stream table, the MAC rate is 522.2.

However, the SINR and hence MAC rate depends on which traffic is being calculated. For example, to calculate the required load traffic of backhaul link 202b for the downlink direction, the relevant backhaul traffic in the above equation, Equation 4, is the downlink backhaul traffic from backhaul link 202a and the corresponding SINR for determining backhaul MAC rate is the SINR recorded by extender 208a when communicating with extender 208b. The local traffic is the downlink traffic from the non-AP station(s) serviced, in this case, also by the AP component 224 of extender 208b.

The local MAC rate is determined based on the known load behavior of the end user devices. For example, for a set-top box, the maximum PHY rate is, in some embodiments of the invention, taken to be 585 Mbps, based on a Wi-Fi modulation and coding scheme (MCS) index of 7, over an 80MHz channel, with 2 spatial streams. From FIG. 10B, this corresponds to a MAC rate of 458.

Determining the amount of channel usage required for retransmission

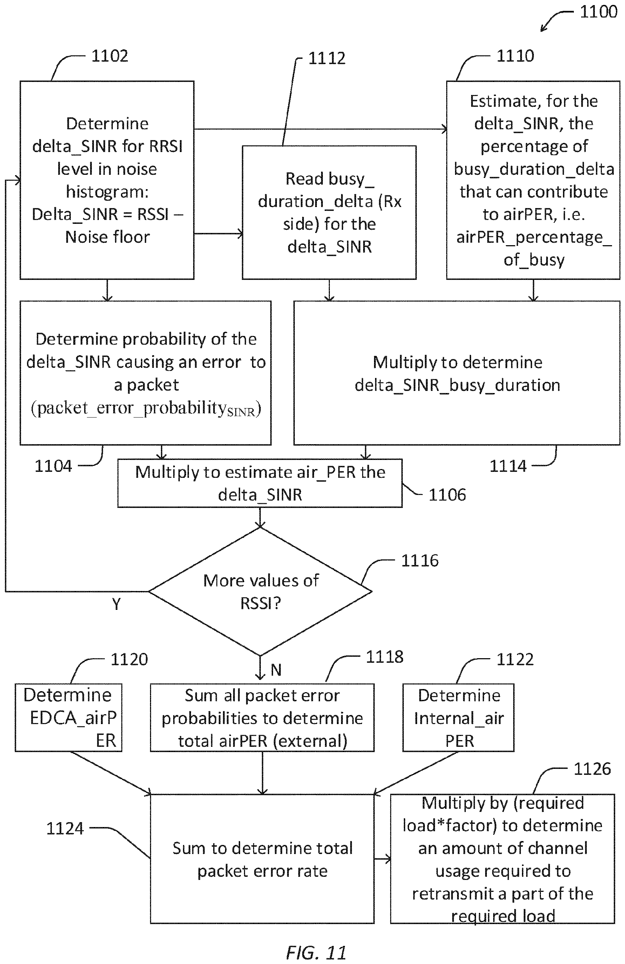

An exemplary method 1100 for determining the amount of channel usage required for retransmission (retransmission_usage in Equation 1), referred to in FIG. 9A by step 904, is depicted as a flow diagram in FIG. 11. The need for retransmission is caused by packet errors in the receiving traffic over the given wireless link. The errors affect a percentage of the transmitted traffic through the link, thus giving rise to an air packet error rate (airPER) of the transmitted traffic. The airPER is due to (i) packet errors caused by external interferers; and (ii) packet errors caused by internal interferers. The packet errors caused by internal or external interferes, calculated in accordance with the description herein are errors resulting from hidden nodes. Investigations by the present inventors have found that airPER errors due to Enhanced Distributed Channel Access (EDCA) collisions are accounted for by the time sharing usage discussed herein, except for mutual transmission collisions whereby both ends of a given backhaul link transmit at the same time. However, investigations by the present inventors have found that the resource usage contribution arising from such mutual transmission collisions is very small compared with other noise-derived resource usage calculations discussed herein, and therefore may optionally be ignored.

The airPER caused by external interferers is calculated by the processing system 304 in steps 1102 to 1118 of method 1100. At step 1102, processing system 304 reads an RSSI level from the noise histogram stored in respect of a receiver end of the relevant link, such as the histogram 700 of FIG. 7A. The processing system begins by reading, for example, the highest RSSI level 708, which is above the run-time CCA_level.

The processing system then determines a delt_SINR value from the noise determined by the noise histogram RSSI level. The delt_SINR is determined as:

Equation 6:

$$delta\_SINR = RSSI\ level - Noise\ Floor$$

The noise floor is assumed to be -93dB for the exemplary embodiments described herein Therefore, for the RRSI level of -70dB (for example), the delt_SINR is -70 - (-93) = 23 dB.

At step 1104 the processing system determines the probability of that value of delta-SINR give rise to error to a packet if the there is a transmitting hidden node. The probability is calculated as:

Equation 7:

$$packet\_error\_probability_{SINR} =$$

$$0 \qquad (for\ SINR <= 0)$$

$$1 \qquad (for\ SINR >= 8)$$

$$0.001_* e^{deltaSINR*0.86} \qquad (for\ 0 < SINR < 8)$$

At step 1106, the packet_error_probability$_{SINR}$ is multiplied by a percentage of time that has potential to give rise to an airPER, the percentage it is multiplied by is termed herein delt_SINR busy_duration. The product is an expected percentage of transmitted signal from the transmitter that is expected to experience packet errors, in other words, it is the expected packet error rate, airPER$_{SINR}$, for signals of that SINR

The airPER_time is equal to an air_PER_percentage_of_busy parameter multiplied by a percentage of time that a signal transmitted over the link has the SINR (i.e. the busy_duration_delta for the SINR), where air_PER_percentage_of_busy is the percentage of that signal transmission that coincides with a hidden node transmission. In equation form expected _airPER$_{SINR}$ is calculated as follows:

Equation 8

$$expected\_airPER_{SINR} = packet\_error\_probability_{SINR} * delta\_SINR\_busy\_duration,$$

where:

Equation 9:

$$delta\_SINR\_busy\_duration =$$

$$air\_PER\_percentage\_of\_busy\_delta * busy\_duration\_delta$$

As will now be explained, air_PER_percentage_of_busy_delta is, in some embodiments, estimated to be equal to a correlation between interferers seen by the receiver side of the link and interferers seen by both the receiver and transmitter sides of the link.

At step 1110 the processing system estimates the correlation. In some embodiments this achieved by estimating how strongly interferers that affect the receiver side of the link are correlated with interferers that affect both the receiver and transmitter side of the link. This may be derived as a correlation between: a first interferer list that identifies the external interferer APs that had been seen at the transmitter end of the link; and a second list of external interferer list that identifies all external interferer APs that had been by the receiver end of the link. The interferers lists were established as part of process 600, with the interferers being identified from their respective AP beacons. The correlation is, in some embodiments, determined as follows:

$$AP\_Correlation = APList_{intersection} \div RxSideInterferer$$

where:

$APList_{intersection}$ = the number of devices in an intersection of the first list and the second list; and

RxSideInterferer = the number of devices in the second list.

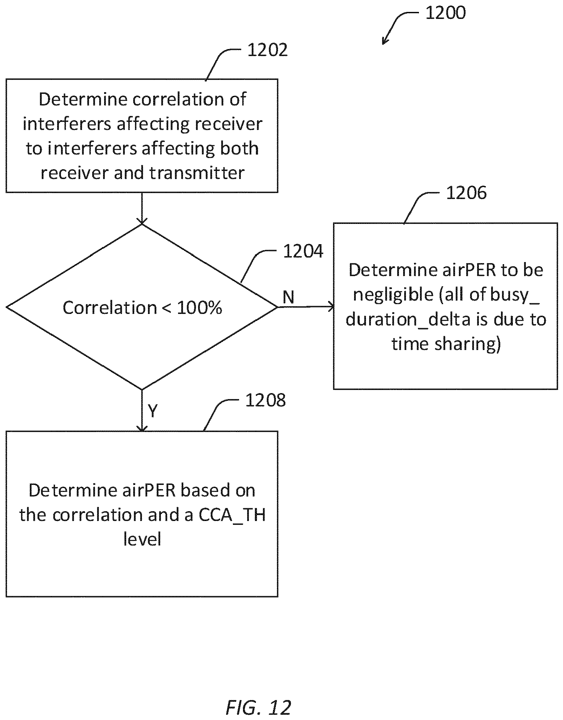

As shown in the method 1200 of FIG. 12, at step 1202, the correlation is determined, in this example as a ratio. At step 1204 the correlation is then compared to see whether it is 100% (i.e. the ratio is 1). In an event that the correlation is 100%, it is assumed that there are no nodes visible to the receiver side of the backhaul link that are hidden from the transmitter side of the backhaul link. Thus, it is assumed that there is no risk that the transmitter will transmit to the receiver while a hidden node is also transmitting to the receiver. At step 1206, the airPER for transmissions from the transmitter to the receiver is therefore taken to be negligible, e.g. <1% or, in some embodiments, zero. All of the busy duration at the receiver is therefore due to time-shared transmission by the transmitter

However, in an event that the correlation is found to be less than 100%, it is assumed that there is at least one hidden node. For example, if the correlation is found to be 75,%, it is interpreted as meaning that 75% of the busy duration at the receiver is due to time-shared transmission on the transmitter side. The remaining 25% is concluded to be from the hidden node(s). There is therefore a certain amount of air packet error, the amount being dependent on the delt_SINR value, as defined in Equation 7.

With the above example, air _PER_percentage_of_busy _delta is taken to be 25%.

However, in other embodiments, such as if the correlation cannot be determined or relied upon, a worst case scenario can instead be used, whereby all of the noise that causes the busy duration is attributed to contributing to airPER (i.e. air_PER_percentage__of_busy _delta = 100%). However, for the case of determining correlation from external interferers, it is believed by the present inventors that correlation can be relied upon. This is based on an assumption that APs on opposing sides of a backhaul link are separated by 5 to 10 meters. As such an interferer signal received at one of the APs will generally be within 5 to 8 dB of the interferer signal as received by the other of AP at the other end of the backhaul link. Since 5 to 8dB is comparable to the 6dB gradation between CCA levels in the noise histogram, the present inventors correlate interferers by comparing interferer lists for the same CCA threshold in the noise histogram.

As discussed above, in the exemplary embodiments described herein, the run-time CCA threshold level is predicted to be -88dB. This value is used because it is a default value commonly used in practice. However, in other embodiments, the run-time CCA threshold level is the actual run-time CCA threshold. The delta _SINR is the difference between the RSSI (i.e. the value of the CCA threshold at which the measured busy duration was measured) and the run-time CCA threshold level (whether assumed/predicted or actually measured).

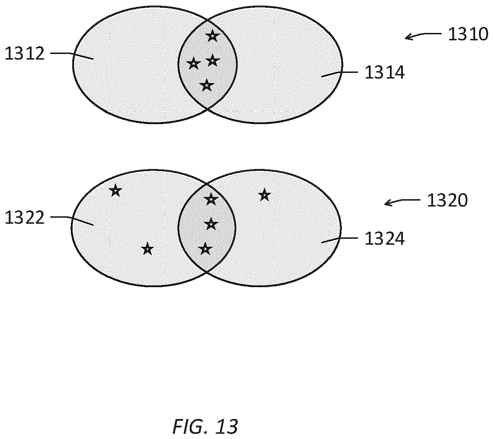

Examples of determining the likelihood of a packet error resulting from the presence of the hidden node(s) based on two inputs are provided below with reference to FIG. 13, which illustrates two examples, 1310, 1320 showing cell areas of a transmitter 1312, 1322, respectively, which encompasses the interferers that make up the list at the transmitter, respectively, and cell areas of a receiver 1314, 1324, respectively, which encompasses the interferers that make up the list at the receiver.

In example 1310, the receiver hears 4 APs, all of which are also heard by the transmitter. Thus the correlation is 100%. In example 1320, the receiver hears 4 APs, 3 of which are also heard by the transmitter. Thus the correlation, for the receiver side of the backhaul link, is 75%, so air_PER_percentage_of_busy is 25%. However, for any values of RSSI levels in the noise histogram at the receiver that are below the run-time CCA level, none of the busy duration measurements can be due to a time-shared transmission from the transmitting end of the link. In case of there being a short distance (e.g. less than 10 meters) between the transmitter and receiver sides of the link, in some embodiments, the worst case is assumed, whereby all of the busy durations at the receiver are attributed to air_PER noise at the receiver device, and thus air_PER_percentage_of_busy_delta is 100%.

In the exemplified embodiments described above, the correlation between the receiver and transmitter interferers is calculated, but in other embodiments the airPER is estimated based on an empirically derived data mapping run-time CCA threshold level to air_PER_percentage__of_busy _delta. The correlation is in such cases intrinsic to the data but it not actually calculated. In these embodiments, the ACS 501, reads the actual run-time CCA threshold used by each node device 206, 208 to predict air_PER_percentage_of_busy delta. For example, this could be: 20% for low CCA threshold (e.g. -90dB); 40% for High CCA threshold (e.g. -70db); and a linear or other interpolation of values within this range.

Regardless of how air_PER_percentage_of_busy is determined, at step 1114, the determined air_PER_percentage_of busy parameter it is multiplied by the busy_duration_delta value, read from memory of the busy histogram, at step 1112. The busy_duration_delta value that is read is the value that corresponds to the particular delt_SINR being evaluated. The product, produced at step 1114, gives the delta-SINR busy _duration value. As discussed above, this value is used in step 1106 to determine the airPER corresponding to that delta-SINR value.

Once expected _airPER$_{SINR}$ has been calculated at step 1106, then if there are more RSSI (and hence SINR) values for the histogram, then at step 1116, the next value of RSSI is read and the process 1100 repeats from step 1102. Once expected _airPER$_{SINR}$ has been calculated for all values of RSSI, each of the expected_airPER$_{SINR}$ values are summed at step 1118 to determine the expected total airPER from interferers external to the backhaul 102.

Internal Interferers

In the boot sequence in process 600, the APs in node devices 206, 208 associated with the backhaul 102 are simultaneously booting are not taken into account in the medium busy (i.e. noise) histogram. In the absence of measuring the noise histogram caused by the internal BH devices, a noise histogram is instead calculated from the known load and PHY rate corresponding to each internal interferer, and any channel separation between the interferer channel and the channel of the AP affected by the interference.

Firstly, the medium usage from the interferer is calculated as being equal to the load divided by the PHY rate (or more precisely MAC rate), in accordance with Equation 4A.

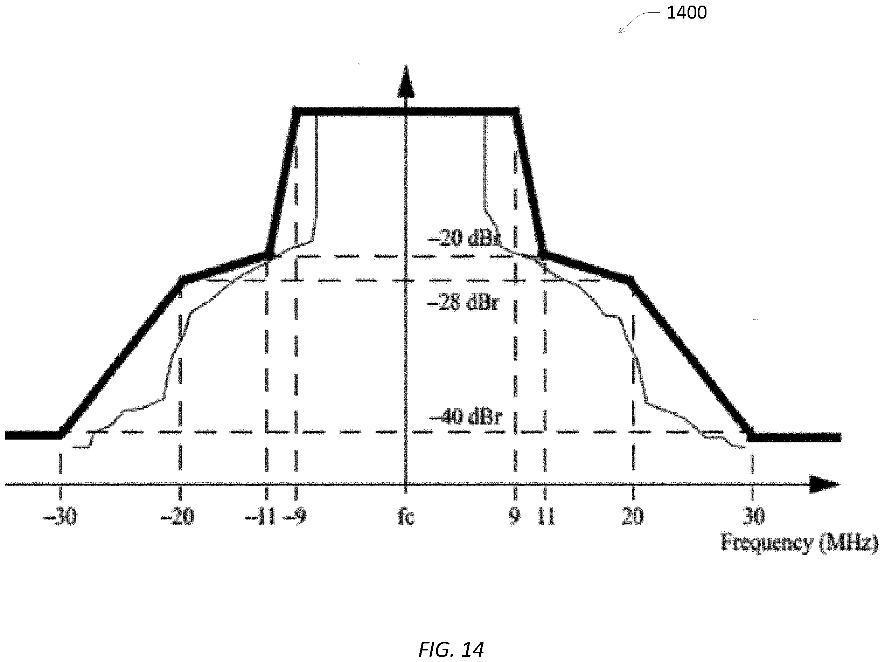

Secondly, the RSSI level measured at the step 610610 of scan process 600 and the channel separation information are used to calculate the signal level between the interferer AP and the affected AP. Whereas the measured noise histogram of external interferers uses CCA threshold to estimate RRSI levels from the external interferers, in the case of the internal interferers the RRSI from each internal interferer is known from step 610610. However, in topologies where the interferer and the affected AP are on different channels, there is a further drop in RSSI level, because the frequency characteristics of each channel, for example as illustrated in FIG. 14.

The noise histogram is then constructed whereby each entry in the noise histogram has an RSSI level that is the measured channel-separation adjusted RSSI level from a given internal interferer and the busy_delta parameter is equal to the percentage value of the determined medium usage corresponding to that interferer.

Lastly, based on the noise histogram, airPER and time sharing components of usage are calculated in the same manner as described elsewhere herein, but with one exception. Specifically, there is no need to determine a correlation of internal interferer APs affecting either side of the given BH link. This is because the exact Delta SINR level is known (the RSSI level minus the noise floor) between all BH link devices, and the exact medium usage of each BH link is also known. Therefore, the airPER resulting from the internal interferers may be calculated using steps 1102 to 1116 of process 1100, except that: (a) the noise histogram is the calculated internal interferer noise histogram; and (b) in step 1100, rather than estimating the percentage of busy_duration_delta that can contribute to airPER, it is determined as follows:

A) For RSSI levels greater (or equal) than to the run-time CCA level, there is determined to be no airPER, so airPER_percentage_of_busy is taken to be 0.

B) For RSSI levels less than the run-time CCA level, airPER_percentageof busy is taken to be 100%.

EDCA collisions

Steps 1118 and 1122 calculate airPER resulting from external and internal interferers, respectively. However, more precisely, they calculate the airPER resulting from one or more hidden nodes. However a relatively small amount of airPER can also result from EDCA collisions. The contribution of EDCA_airPER tends to be small, so in some embodiments is ignored. However, at step 1120 the processing system 304 optionally calculates airPER due to EDCA collisions. This is calculated based on the likelihood that backoff periods by a backhaul AP at the transmitter end of the link and an interferer AP end at the same time. The backhaul AP thinks that no other AP is transmitting, so is not in time sharing mode, and so transmits, but the interferer transmits at the same time, as it too thinks there are no other APs transmitting, and the result is a collision of the transmissions. The likelihood of the backoff periods ending at the same time is dependent on the Cw_min index of the backoff, and the EDCA probability of simultaneous transmission is:

$$EDCA\_probability = 2/(Cw\_min + 1).$$

The minimum usable index is 7, which from the above equation gives a worst case EDCA_probability of 25% at the transmitter side of the backhaul link. Like the airPER calculation, the EDCA _airPER calculation is based on a sum of EDCA _airPER$_{SINR}$ calculations for the respective RSSI values in the busy histogram (whether it be the measured or calculated histogram). Each EDCA _airPER$_{SINR}$ value is dependent on the aforementioned AP correlation and the busy_duration_delta values for the SINR, and packet_error_probability$_{SINR}$. In particular:

$$EDCA\_airPER_{SINR} = packet\_error\_probability_{SINR} * busy\_duration\_delta_{SINR} * correlation *$$
$$EDCA\_probability.$$

For example for packet_error_probability$_{SINR}$ of 100%, busy_duration_delta$_{SINR}$ of 5%, and AP correlation of 100%, and EDCA_probability of 25%, EDCA _airPER$_{SINR}$ is 0.25%.

Determining total retransmission usage

At step 1124 of process 1100, the processing system 304 sums the airPER contributions determined in each of steps 1118, 1120 and 1122 to determine the total airPER. At step 1126 the total airPER is multiplied by the clean medium use (i.e. the "required load", as a percentage of channel resources), and a correction factor, to determine the amount (percentage) of channel usage required to retransmit the part of the required load that experiences packet errors due to the airPER. The determined amount is the retransmission_usage value in Equation 1. The correction factor is a function of the airPER. It represents that amount of retransmitted load that must be retransmitted a second time, because a certain percentage of the retransmitted load will also experience packet errors because of the airPER. A certain percentage of the second transmission may also need to be transmitted, and so on. However, though the correction factor is a function of airPER, in some embodiments it is determined empirically. A certain range of airPERs are assumed and a fixed correction factor is used for regardless of the actual calculated airPER. In other embodiments, a plurality of correction factors are used for a respective plurality of airPER ranges. In some embodiments, the correction factor is in the range of 1.1 to 1.5. In equation form:

$$retransmission\_usage = airPER*required\_usage*correction\_factor$$

Time Sharing

As can be seen from Equation 1, to complete the determination of the channel usage, time_sharing_usage is also calculated. The time sharing usage affects a transmitting side of the given backhaul link. Thus, for downlink usage the time sharing occurs on the AP on the side of the link towards the HGW, whereas for uplink usage the time sharing occurs on non AP STA on the distal side of the link. The time sharing usage has components from external and internal interferers, which must be summed to determine the total time sharing usage.

For external interferers, the time sharing usage is equal to the medium busy duration at the run-time CCA threshold, as derived from the measured noise histogram.

For the internal interferers, a time sharing component is calculated for each internal interferer, and summed to determine the time sharing usage from the internal interferers. The time sharing component from each internal interfere is derived from the calculated noise histogram of internal interferers. In particular, for each interferer having an RSSI greater than the run-time CCA threshold, the time sharing usage is equal to the determined channel usage corresponding to that interferer.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to $\pm$ 10 %.

The terms "comprises", "comprising", "includes", "including", "having" and their conjugates mean "including but not limited to". This term encompasses the terms "consisting of" and "consisting essentially of'.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Citation or identification of any reference in this application shall not be construed as an admission that such reference is available as prior art to the present invention.

To the extent that section headings are used, they should not be construed as necessarily limiting.

The scope of protection shall be defined by the appended claims.

**Claims**

1. A device (206) for implementing Automatic Channel Selection, ACS, in a Wireless Local Area Network, WLAN (100), the device comprising at least one processor (304) configured to:

   receive a plurality of network operational data sets corresponding to at least two node devices (206, 208(a, b, c)) of a plurality of node devices (206, 208, 209, 210, 211) of the WLAN (100);

   select, based on the operational data sets, for each link of a plurality of wireless links (202(a, b, c), 204) of the WLAN (100) that are connected in series and collectively include at least one wireless backhaul link (202) that connects the at least two node devices (206, 208), a communication channel for operating the wireless link (202, 204) from a plurality of communication channels; and

   instruct the at least two node devices to transmit channel identification data to operate the selection for each wireless link (202, 204);

   wherein the links (202, 204) are connected as a chain (102) and the channels are selected based on end-to-end performance;

   wherein the plurality of communication channels comprises at least a set of primary communication channels and a set of secondary communication channels, wherein each primary channel has a unique frequency range and the unique frequency range of each primary communication channels corresponds to a combined frequency range of two or more secondary communication channels;

   wherein when a first primary communication channel is determined to be busy, the device is configured to:

   evaluate each secondary communication channel corresponding to the first primary communication channel for selection as the communication for operating the wireless link.

2. A device according to claim 1, wherein the selection comprises determining end-to-end performance for each of a plurality of different permutations of channel selections for each of the wireless links (202, 204), and selecting a permutation corresponding to a determined end-to end performance.

3. A device according to claim 2, wherein for each of the plurality of different permutations of channel selections performance is determined based on measurements of link-level performance respectively corresponding each of the at least one wireless backhaul links (202).

4. A device according to claim 3, wherein each measurement of link-level performance is based on a measurement of channel usage for the corresponding wireless backhaul link (202).

5. A device according to any one of claims 1 to 4, wherein the performance is a measurement of data loss.

6. A device according to any one of claims 1 to 5, wherein the selection is based on measurements of channel usage corresponding to each of the at least one wireless backhaul links (202), each measurement of channel usage correspond to one of the wireless backhaul links (202), wherein the measurement of channel usage for the backhaul link (202) is determined based on a calculated load through the wireless backhaul link (202) and an estimated effect of noise on utilization of the wireless backhaul link (202).

7. A device according to claim 6, wherein at least one processor (304) is configured to determine the measurement of channel usage for the corresponding wireless backhaul link (202), the determination of the measurement comprising:

   calculating a first required channel usage to transmit a load demand comprising a first required load in a first direction that is from a first node device at a first end of the backhaul link (202) to a second node device at a second end of the backhaul link (202), the calculation of the first required channel usage being based on a function of first usage parameters comprising:

   an amount of channel usage required to transmit the first required load, without interference from noise, from the first node device to the second node device; and
at least one of:

an amount of channel usage required to retransmit a part of the first required load due to an air Packet Error Rate, airPER, that results from noise affecting receipt of the first required load at the second node device; and
an amount of channel usage that is unavailable for transmission of the first required load due to a requirement for time-sharing of the channel that results from noise affecting transmission of the first required load by first node device.

8. A device according to claim 7, wherein the performance is a measure of data loss, wherein the data loss is a difference between:

(i) a required amount of load usage, being an amount of channel usage required to transmit the load demand without interference from noise; and
(ii) a ratio of:

a) the required amount of load usage; to
b) a sum of the usage parameters.

9. A device according to claim 7 or 8, wherein the at least one processor is configured to:

estimate the airPER; and
estimate the amount of channel usage required to retransmit a part of the load due to the estimated airPER.

10. A device according to claim 9, wherein the plurality of operational data sets comprises a first set of devices (1312, 1322) observable by the first node device and a second set of devices observable by second node device (1314, 1324), and
the at least one processor is further configured to:
estimate the airPER is based, at least in part, on a correlation between the first set of devices and the second set of devices.

11. A device according to claim 10, wherein the at least one processor is configured to:
estimate the airPER according to a function having a product of:

a measured busy medium duration (704) at the second node device; and
the determined correlation.

12. A device according to claim 11, wherein estimating the airPER is based, at least in part, on a difference between (i) a Clear Channel Assessment, CCA, threshold level at which the measured busy medium duration at the second node device was measured; and (ii) a run-time CCA threshold level that is, at least predicted, for run-time of operation of the second node device.

13. A device according to any one of claims 7 to 12, wherein the at least one processor is configured to calculate data loss through the link based on the channel usage, wherein the channel usage further comprises usage to a second required channel usage to transmit a second required load that is in a second direction from the second node device to the first node device, wherein the calculation of the second required channel usage is based on a function of second usage parameters comprising:

an amount of channel usage required to transmit the second required load, without interference from noise, from the second node device to the first node device; and
at least one of:

an amount of channel usage required to retransmit a part of the second required load due to an air Packet Error Rate, airPER, that results from noise affecting receipt of the second required load at the first node device; and
an amount of channel usage that is unavailable for transmission of the second required load due to a requirement for time-sharing of the channel that results from noise affecting transmission of the second required load by second node device.

14. A method (400) of Automatic Channel Selection, ACS, in a Wireless Local Area Network, WLAN (100), the method comprising:

receiving a plurality of network operational data sets corresponding to at least two node devices (206, 208(a, b, c)) of a plurality of node devices (206, 208, 209, 210, 211) of the WLAN (100);

selecting, based on the operational data sets, for each link of a plurality of wireless links (202(a, b, c), 204) of the WLAN (100) that are connected in series and collectively include at least one wireless backhaul link (202) that connects the at least two node devices (206, 208), a communication channel for operating the wireless link (202, 204) from a plurality of communication channels; and

instructing the at least two node devices to transmit channel identification data to operate the selection for each wireless link (202, 204);

wherein the links (202, 204) are connected as a chain (102) and the channels are selected based on end-to-end performance;

wherein the plurality of communication channels comprises at least a set of primary communication channels and a set of secondary communication channels, wherein each primary channel has a unique frequency range and the unique frequency range of each primary communication channels corresponds to a combined frequency range of two or more secondary communication channels;

wherein when a first primary communication channel is determined to be busy, the method further comprises: evaluating each secondary communication channel corresponding to the first primary communication channel for selection as the communication for operating the wireless link.

15. A computer program product comprising instructions which, when the program is executed by a computer, cause the computer to carry out the method of claim 14.


**Patentansprüche**

1. Vorrichtung (206) zum Implementieren automatischer Kanalauswahl, ACS, in einem drahtlosen lokalen Netzwerk, WLAN (100), wobei die Vorrichtung mindestens einen Prozessor (304) umfasst, der dazu konfiguriert ist:

eine Vielzahl von Netzwerkbetriebsdatensätzen zu empfangen, die mindestens zwei Knotenvorrichtungen (206, 208 (a, b, c)) einer Vielzahl von Knotenvorrichtungen (206, 208, 209, 210, 211) des WLAN (100) entsprechen;

basierend auf den Betriebsdatensätzen für jede Verbindung einer Vielzahl drahtloser Verbindungen (202(a, b, c), 204) des WLAN (100), die in Reihe geschaltet sind und zusammen mindestens eine drahtlose Backhaul-Verbindung (202), die die mindestens zwei Knotenvorrichtungen (206, 208) verbindet, beinhalten, einen Kommunikationskanal zum Betreiben der drahtlosen Verbindung (202, 204) von einer Vielzahl von Kommunikationskanälen auszuwählen; und

die mindestens zwei Knotenvorrichtungen anzuweisen, Kanalidentifikationsdaten zu übertragen, um die Auswahl für jede drahtlose Verbindung (202, 204) zu betreiben;

wobei die Verbindungen (202, 204) als eine Kette (102) verbunden sind, und die Kanäle basierend auf der Ende-zu-Ende-Leistung ausgewählt sind;

wobei die Vielzahl von Kommunikationskanälen mindestens einen Satz von Primärkommunikationskanälen und einen Satz von Sekundärkommunikationskanälen umfasst, wobei jeder Primärkanal einen eindeutigen Frequenzbereich aufweist, und der eindeutige Frequenzbereich jedes Primärkommunikationskanals einem kombinierten Frequenzbereich von zwei oder mehr Sekundärkommunikationskanälen entspricht;

wobei, wenn bestimmt wird, dass ein erster Primärkommunikationskanal belegt ist, die Vorrichtung konfiguriert ist, um:

jeden Sekundärkommunikationskanal, der dem ersten Primärkommunikationskanal entspricht, zur Auswahl als die Kommunikation zum Betreiben der drahtlosen Verbindung zu bewerten.

2. Vorrichtung nach Anspruch 1, wobei die Auswahl das Bestimmen von Ende-zu-Ende-Leistung für jede einer Vielzahl unterschiedlicher Permutationen von Kanalauswahlen für jede der drahtlosen Verbindungen (202, 204) und das Auswählen einer Permutation, die einer bestimmten e-zu-Ende-Leistung entspricht, umfasst.

3. Vorrichtung nach Anspruch 2, wobei für jede der Vielzahl unterschiedlicher Permutationen von Kanalauswahlen die Leistung basierend auf Messungen der Verbindungsebenenleistung, die jeweils jeder der mindestens einen drahtlosen Backhaul-Verbindung (202) entsprechen, bestimmt wird.

4. Vorrichtung nach Anspruch 3, wobei jede Messung von Verbindungsebenenleistung auf einer Kanalnutzungsmessung für die entsprechende drahtlose Backhaul-Verbindung (202) basiert.

5. Vorrichtung nach einem der Ansprüche 1 bis 4, wobei die Leistung ein Maß für Datenverlust ist.

6. Vorrichtung nach einem der Ansprüche 1 bis 5, wobei die Auswahl auf Kanalnutzungsmessungen, die jeder der mindestens einen drahtlosen Backhaul-Verbindungen (202) entsprechen, basiert, wobei jede Kanalnutzungsmessung einer der drahtlosen Backhaul-Verbindungen (202) entspricht, wobei die Kanalnutzungsmessung für die Backhaul-Verbindung (202) basierend auf einer berechneten Last durch die drahtlose Backhaul-Verbindung (202) und einer geschätzten Auswirkung von Rauschen auf die Verwendung der drahtlosen Backhaul-Verbindung (202) bestimmt wird.

7. Vorrichtung nach Anspruch 6, wobei mindestens ein Prozessor (304) dazu konfiguriert ist, die Kanalnutzungsmessung für die entsprechende drahtlose Backhaul-Verbindung (202) zu bestimmen, wobei die Bestimmung der Messung Folgendes umfasst:
   Berechnen einer ersten erforderlichen Kanalnutzung, um eine Lastanforderung, die eine erste erforderliche Last in einer ersten Richtung umfasst, die von einer ersten Knotenvorrichtung an einem ersten Ende der Backhaul-Verbindung (202) zu einer zweiten Knotenvorrichtung an einem zweiten Ende der Backhaul-Verbindung (202) ist, zu übertragen, wobei die Berechnung der ersten erforderlichen Kanalnutzung auf einer Funktion erster Nutzungsparameter basiert, umfassend:

   eine Kanalnutzungsmenge, die erforderlich ist, um die erste erforderliche Last ohne Interferenz durch Rauschen von der ersten Knotenvorrichtung zu der zweiten Knotenvorrichtung zu übertragen; und
   mindestens eines von:

   einer Kanalnutzungsmenge, die erforderlich ist, um einen Teil der ersten erforderlichen Last aufgrund einer Luftpaketfehlerrate, airPER, die aus Rauschen resultiert, das den Empfang der ersten erforderlichen Last an der zweiten Knotenvorrichtung beeinträchtigt, erneut zu übertragen; und
   einer Kanalnutzungsmenge, die zur Übertragung der ersten erforderlichen Last aufgrund einer Anforderung zur Zeitteilung des Kanals, die aus Rauschen resultiert, das die Übertragung der ersten erforderlichen Last durch die erste Knotenvorrichtung beeinträchtigt, nicht verfügbar ist.

8. Vorrichtung nach Anspruch 7, wobei die Leistung ein Maß für Datenverlust ist, wobei der Datenverlust eine Differenz ist zwischen:

   (i) einer erforderlichen Lastnutzungsmenge, die eine Kanalnutzungsmenge ist, die erforderlich ist, um die Lastanforderung ohne Interferenz durch Rauschen zu übertragen; und
   (ii) einem Verhältnis:

   a) der erforderlichen Lastnutzungsmenge; zu
   b) einer Summe der Nutzungsparameter.

9. Vorrichtung nach Anspruch 7 oder 8, wobei der mindestens eine Prozessor dazu konfiguriert ist:

   die airPER zu schätzen; und
   die Kanalnutzungsmenge, die erforderlich ist, um einen Teil der Last aufgrund der geschätzten airPER erneut zu übertragen, zu schätzen.

10. Vorrichtung nach Anspruch 9, wobei die Vielzahl von Betriebsdatensätzen einen ersten Satz von Vorrichtungen (1312, 1322), die von der ersten Knotenvorrichtung beobachtbar sind, und einen zweiten Satz von Vorrichtungen, die von der zweiten Knotenvorrichtung (1314, 1324) beobachtbar sind, umfasst, und wobei der mindestens eine Prozessor ferner dazu konfiguriert ist:
    die airPER mindestens zum Teil basierend auf einer Korrelation zwischen dem ersten Satz von Vorrichtungen und dem zweiten Satz von Vorrichtungen zu schätzen.

11. Vorrichtung nach Anspruch 10, wobei der Prozessor ferner dazu konfiguriert ist:

die airPER gemäß einer Funktion zu schätzen, die ein Produkt aufweist, aus:

einer gemessenen Belegt-Medium-Dauer (704) an der zweiten Knotenvorrichtung; und
der ermittelten Korrelation.

12. Vorrichtung nach Anspruch 11, wobei das Schätzen der airPER mindestens zum Teil auf einer Differenz zwischen (i) einem Clear-Channel-Assessment-Schwellenwertpegel, CCA-Schwellenwertpegel, bei dem die gemessene Belegt-Medium-Dauer an der zweiten Knotenvorrichtung gemessen wurde; und (ii) einem Laufzeit-CCA-Schwellenwertpegel, der mindestens für die Laufzeit des Betriebs der zweiten Knotenvorrichtung vorhergesagt wird, basiert.

13. Vorrichtung nach einem der Ansprüche 7 bis 12, wobei der mindestens eine Prozessor dazu konfiguriert ist, Datenverlust durch die Verbindung basierend auf der Kanalnutzung zu berechnen, wobei die Kanalnutzung ferner eine Nutzung zu einer zweiten erforderlichen Kanalnutzung zum Übertragen einer zweiten erforderlichen Last, die in einer zweiten Richtung von der zweiten Knotenvorrichtung zu der ersten Knotenvorrichtung ist, umfasst, wobei die Berechnung der zweiten erforderlichen Kanalnutzung auf einer Funktion zweiter Nutzungsparameter basiert, umfassend:

eine Kanalnutzungsmenge, die erforderlich ist, um die zweite erforderliche Last ohne Interferenz durch Rauschen von der zweiten Knotenvorrichtung zu der ersten Knotenvorrichtung zu übertragen; und
mindestens eines von:

einer Kanalnutzungsmenge, die erforderlich ist, um einen Teil der zweiten erforderlichen Last aufgrund einer Luftpaketfehlerrate, airPER, die aus Rauschen resultiert, das den Empfang der zweiten erforderlichen Last an der ersten Knotenvorrichtung beeinträchtigt, erneut zu übertragen; und
eine Kanalnutzungsmenge, die zur Übertragung der zweiten erforderlichen Last aufgrund einer Anforderung zur Zeitteilung des Kanals, die aus Rauschen resultiert, das die Übertragung der zweiten erforderlichen Last durch die zweite Knotenvorrichtung beeinträchtigt, nicht verfügbar ist.

14. Verfahren (400) zur automatischen Kanalauswahl, ACS, in einem drahtlosen lokalen Netzwerk, WLAN (100), wobei das Verfahren Folgendes umfasst:

Empfangen einer Vielzahl von Netzwerkbetriebsdatensätzen, die mindestens zwei Knotenvorrichtungen (206, 208(a, b, c)) einer Vielzahl von Knotenvorrichtungen (206, 208, 209, 210, 211) des WLAN (100) entsprechen;
Auswählen, basierend auf den Betriebsdatensätzen, für jede Verbindung einer Vielzahl drahtloser Verbindungen (202(a, b, c), 204) des WLAN (100), die in Reihe geschaltet sind und zusammen mindestens eine drahtlose Backhaul-Verbindung (202), die die mindestens zwei Knotenvorrichtungen (206, 208) verbindet, beinhalten, eines Kommunikationskanals zum Betreiben der drahtlosen Verbindung (202, 204) aus einer Vielzahl von Kommunikationskanälen; und
Anweisen der mindestens zwei Knotenvorrichtungen, Kanalidentifikationsdaten zu übertragen, um die Auswahl für jede drahtlose Verbindung (202, 204) zu betreiben;
wobei die Verbindungen (202, 204) als eine Kette (102) verbunden sind, und die Kanäle basierend auf der Ende-zu-Ende-Leistung ausgewählt sind;
wobei die Vielzahl von Kommunikationskanälen mindestens einen Satz von Primärkommunikationskanälen und einen Satz von Sekundärkommunikationskanälen umfasst, wobei jeder Primärkanal einen eindeutigen Frequenzbereich aufweist, und der eindeutige Frequenzbereich jedes Primärkommunikationskanals einem kombinierten Frequenzbereich von zwei oder mehr Sekundärkommunikationskanälen entspricht;
wobei, wenn bestimmt wird, dass ein erster Primärkommunikationskanal belegt ist, das Verfahren ferner Folgendes umfasst:
Bewerten jedes Sekundärkommunikationskanals, der dem ersten Primärkommunikationskanal entspricht, zur Auswahl als die Kommunikation zum Betreiben der drahtlosen Verbindung.

15. Computerprogrammprodukt, das Anweisungen umfasst, die, wenn das Programm von einem Computer ausgeführt wird, den Computer dazu veranlassen, das Verfahrens nach Anspruch 14 auszuführen.

**Revendications**

1. Dispositif (206) pour mettre en œuvre la sélection automatique de canal, ACS, dans un réseau local sans fil, WLAN (100), le dispositif comprenant au moins un processeur (304) configuré pour :

recevoir une pluralité d'ensembles de données opérationnelles de réseau correspondant à au moins deux dispositifs de nœud (206, 208(a, b, c)) d'une pluralité de dispositifs de nœud (206, 208, 209, 210, 211) du WLAN (100) ;

sélectionner, sur la base des ensembles de données opérationnelles, pour chaque liaison d'une pluralité de liaisons sans fil (202(a, b, c), 204) du WLAN (100) qui sont connectées en série et comportent collectivement au moins une liaison de raccordement sans fil (202) qui connecte les au moins deux dispositifs de nœud (206, 208), un canal de communication pour faire fonctionner la liaison sans fil (202, 204) à partir d'une pluralité de canaux de communication ; et

ordonner aux au moins deux dispositifs de nœud de transmettre des données d'identification de canal pour opérer la sélection pour chaque liaison sans fil (202, 204) ;

dans lequel les liaisons (202, 204) sont connectées en tant que chaîne (102) et les canaux sont sélectionnés sur la base d'une performance de bout en bout ;

dans lequel la pluralité de canaux de communication comprend au moins un ensemble de canaux de communication primaires et un ensemble de canaux de communication secondaires, dans lequel chaque canal primaire a une plage de fréquences unique et la plage de fréquences unique de chaque canal de communication primaire correspond à une plage de fréquences combinée de deux canaux de communication secondaires ou plus ;

dans lequel lorsqu'un premier canal de communication primaire est déterminé comme étant occupé, le dispositif est configuré pour :

évaluer chaque canal de communication secondaire correspondant au premier canal de communication primaire pour sélection en tant que communication pour faire fonctionner la liaison sans fil.

2. Dispositif selon la revendication 1, dans lequel la sélection comprend la détermination d'une performance de bout en bout pour chacune d'une pluralité de permutations différentes de sélections de canal pour chacune des liaisons sans fil (202, 204), et la sélection d'une permutation correspondant à une performance de bout en bout déterminée.

3. Dispositif selon la revendication 2, dans lequel pour chacune de la pluralité de permutations différentes de sélections de canal, une performance est déterminée sur la base de mesures de performance au niveau de la liaison correspondant respectivement à chacune de l'au moins une parmi les liaisons de raccordement sans fil (202).

4. Dispositif selon la revendication 3, dans lequel chaque mesure de performance au niveau de la liaison est basée sur une mesure d'utilisation de canal pour la liaison de raccordement sans fil (202) correspondante.

5. Dispositif selon l'une quelconque des revendications 1 à 4, dans lequel la performance est une mesure de perte de données.

6. Dispositif selon l'une quelconque des revendications 1 à 5, dans lequel la sélection est basée sur des mesures d'utilisation de canal correspondant à chacune de l'au moins une parmi les liaisons de raccordement sans fil (202), chaque mesure d'utilisation de canal correspond à l'une des liaisons de raccordement sans fil (202), dans lequel la mesure d'utilisation de canal pour la liaison de raccordement (202) est déterminée sur la base d'une charge calculée via la liaison de raccordement sans fil (202) et d'un effet du bruit estimé sur l'utilisation de la liaison de raccordement sans fil (202).

7. Dispositif selon la revendication 6, dans lequel au moins un processeur (304) est configuré pour déterminer la mesure d'utilisation de canal pour la liaison de raccordement sans fil (202) correspondante, la détermination de la mesure comprenant :

le calcul d'une première utilisation de canal requise pour transmettre une demande de charge comprenant une première charge requise dans une première direction qui va d'un premier dispositif de nœud au niveau d'une première extrémité de la liaison de raccordement (202) à un second dispositif de nœud au niveau d'une seconde extrémité de la liaison de raccordement (202), le calcul de la première utilisation de canal requise étant basé sur une fonction de premiers paramètres d'utilisation comprenant :

une quantité d'utilisation de canal requise pour transmettre la première charge requise, sans interférence de bruit, du premier dispositif de nœud au second dispositif de nœud ; et
au moins l'une parmi :

une quantité d'utilisation de canal requise pour retransmettre une partie de la première charge requise en raison d'un taux d'erreur de paquets aériens, airPER, qui résulte du bruit affectant la réception de la première charge requise au niveau du second dispositif de nœud ; et

une quantité d'utilisation de canal qui n'est pas disponible pour la transmission de la première charge requise en raison d'une exigence de partage de temps du canal qui résulte du bruit affectant la transmission de la première charge requise par le premier dispositif de nœud.

8.  Dispositif selon la revendication 7, dans lequel la performance est une mesure de perte de données, dans lequel la perte de données est une différence entre :

(i) une quantité requise d'utilisation de charge, étant une quantité d'utilisation de canal requise pour transmettre la demande de charge sans interférence de bruit ; et
(ii) un rapport entre :

a) la quantité requise d'utilisation de charge ;
b) une somme des paramètres d'utilisation.

9.  Dispositif selon la revendication 7 ou 8, dans lequel l'au moins un processeur est configuré pour :

estimer l'airPER ; et
estimer la quantité d'utilisation de canal requise pour retransmettre une partie de la charge en raison de l'airPER estimé.

10.  Dispositif selon la revendication 9, dans lequel la pluralité d'ensembles de données opérationnelles comprend un premier ensemble de dispositifs (1312, 1322) observables par le premier dispositif de nœud et un second ensemble de dispositifs observables par le second dispositif de nœud (1314, 1324), et l'au moins un processeur est configuré pour :
estimer que l'airPER est basé, au moins en partie, sur une corrélation entre le premier ensemble de dispositifs et le second ensemble de dispositifs.

11.  Dispositif selon la revendication 10, dans lequel l'au moins un processeur est configuré pour :
estimer l'airPER selon une fonction dont le produit est :

une durée d'occupation moyenne mesurée (704) au niveau du second dispositif de nœud ; et
la corrélation déterminée.

12.  Dispositif selon la revendication 11, dans lequel l'estimation de l'airPER est basée, au moins en partie, sur une différence entre (i) un niveau de seuil d'évaluation de canal libre, CCA, auquel la durée d'occupation moyenne mesurée au niveau du second dispositif de nœud a été mesurée ; et (ii) un niveau de seuil CCA de durée d'exécution qui est, au moins prédit, pour la durée d'exécution du fonctionnement du second dispositif de nœud.

13.  Dispositif selon l'une quelconque des revendications 7 à 12, dans lequel l'au moins un processeur est configuré pour calculer la perte de données via la liaison sur la base de l'utilisation de canal, dans lequel l'utilisation de canal comprend en outre l'utilisation d'une seconde utilisation de canal requise pour transmettre une seconde charge requise qui est dans une seconde direction du second dispositif de nœud au premier dispositif de nœud, dans lequel le calcul de la seconde utilisation de canal requise est basé sur une fonction de seconds paramètres d'utilisation comprenant :

une quantité d'utilisation de canal requise pour transmettre la seconde charge requise, sans interférence de bruit, du second dispositif de nœud au premier dispositif de nœud ; et
au moins l'une parmi :

une quantité d'utilisation de canal requise pour retransmettre une partie de la seconde charge requise en raison d'un taux d'erreur de paquets aériens, airPER, qui résulte du bruit affectant la réception de la seconde charge requise au niveau du premier dispositif de nœud ; et
une quantité d'utilisation de canal qui n'est pas disponible pour la transmission de la seconde charge requise en raison d'une exigence de partage de temps du canal qui résulte du bruit affectant la transmission de la seconde charge requise par le second dispositif de nœud.

**14.** Procédé (400) de sélection automatique de canal, ACS, dans un réseau local sans fil, WLAN (100), le procédé comprenant :

la réception d'une pluralité d'ensembles de données opérationnelles de réseau correspondant à au moins deux dispositifs de nœud (206, 208(a, b, c)) d'une pluralité de dispositifs de nœud (206, 208, 209, 210, 211) du WLAN (100) ;

la sélection, sur la base des ensembles de données opérationnelles, pour chaque liaison d'une pluralité de liaisons sans fil (202(a, b, c), 204) du WLAN (100) qui sont connectées en série et comportent collectivement au moins une liaison de raccordement sans fil (202) qui connecte les au moins deux dispositifs de nœud (206, 208), d'un canal de communication pour faire fonctionner la liaison sans fil (202, 204) à partir d'une pluralité de canaux de communication ; et

le fait d'ordonner aux au moins deux dispositifs de nœud de transmettre des données d'identification de canal pour opérer la sélection pour chaque liaison sans fil (202, 204) ;

dans lequel les liaisons (202, 204) sont connectées en tant que chaîne (102) et les canaux sont sélectionnés sur la base d'une performance de bout en bout ;

dans lequel la pluralité de canaux de communication comprend au moins un ensemble de canaux de communication primaires et un ensemble de canaux de communication secondaires, dans lequel chaque canal primaire a une plage de fréquences unique et la plage de fréquences unique de chaque canal de communication primaire correspond à une plage de fréquences combinée de deux canaux de communication secondaires ou plus ;

dans lequel lorsqu'un premier canal de communication primaire est déterminé comme étant occupé, le procédé comprend en outre :

l'évaluation de chaque canal de communication secondaire correspondant au premier canal de communication primaire pour sélection en tant que communication pour faire fonctionner la liaison sans fil.

**15.** Produit de programme informatique comprenant des instructions qui, lorsque le programme est exécuté par un ordinateur, amènent l'ordinateur à mettre en œuvre le procédé selon la revendication 14.

FIG. 1

EP 3 721 665 B1

*FIG. 2*

EP 3 721 665 B1

300

Memory Unit 307

| Non-transient Mem 312 | System Mem 308 |

| Volatile Mem 310 |

I/O 314

Peripherals 315

Bus 305

Environmental sensing 317

Power Source 316

Processing system 304

Comms Interface 318

321

*FIG. 3*

400

Receive network
operation data
sets
402

Select a channel
for each backhaul
link
404

Transmit channel
identification data
406

*FIG. 4*

FIG. 5

*FIG. 6*

_700_

| CCA threshold (RSSI level) | Busy Duration | Busy Duration Delta |
|---|---|---|
| -70 | 20 | 20 |
| -76 | 30 | 10 |
| -82 | 35 | 5 |
| -88 | 45 | 10 |
| -94 | 65 | 20 |

_702_  _704_  _706_  _708_

**FIG. 7A**

_710_

| Medium Busy Duration (AP Side) | | | |
|---|---|---|---|
| | HGA A | BH A1 | BH A2 | BH A3 |
| -70 | 48.63% | 0.00% | 0.00% | 0.00% |
| -76 | 48.63% | 48.63% | 0.00% | 0.00% |
| -82 | 48.63% | 73.61% | 73.61% | 73.61% |
| -88 | 48.63% | 87.09% | 73.61% | 73.61% |
| -94 | 87.09% | 87.09% | 73.61% | 73.61% |

| Medium Busy Duration (STA Side) | | |
|---|---|---|
| | STA0 | STA1 | STA2 |
| -70 | 48.63% | 0.00% | 0.00% |
| -76 | 48.63% | 0.00% | 0.00% |
| -82 | 48.63% | 73.61% | 73.61% |
| -88 | 48.63% | 73.61% | 73.61% |
| -94 | 87.09% | 87.09% | 87.09% |

_712_

**FIG. 7B**

*FIG. 8*

901

900

Select link to
evaluate

902

Determine an
amount of channel
usage required to
retransmit a part of
the load due to an
airPER

Determine an
amount of channel
usage required for a
load

904

906

Determine an
amount of channel
usage that is
unavailable for
transmission of the
load due to a
requirement for
time-sharing

Determine channel
usage of the link

908

Y

More links
to evaluate?

909

N

Determine end-to-
end performance

910

*FIG. 9A*

FIG. 9B

1000

| SINR | MCS |
|---|---|
| 3.51 | 0 |
| 6.01 | 1 |
| 8.52 | 2 |
| 11.02 | 3 |
| 15.03 | 4 |
| 19.04 | 5 |
| 21.55 | 6 |
| 24.05 | 7 |
| 28.06 | 8 |
| 31.07 | 9 |

*FIG. 10A*

1002

| 80MHz 3 Spatial Stream | | |
|---|---|---|
| MCS | PHY Rate | MAC Rate |
| 9 | 1170 | 752.2 |
| 8 | 1053 | 697.5 |
| 7 | 877.5 | 616.9 |
| 6 | 789.75 | 569.3 |
| 5 | 702 | 522.2 |

| 80MHz 2 Spatial Stream | | |
|---|---|---|
| MCS | PHY Rate | MAC Rate |
| 9 | 780 | 572 |
| 8 | 702 | 528 |
| 7 | 585 | 458 |
| 6 | 526.5 | 419.9 |
| 5 | 468 | 381.5 |

*FIG. 10B*

FIG. 11

1200

1202

Determine correlation of
interferers affecting receiver
to interferers affecting both
receiver and transmitter

1206

1204

Correlation < 100%  —N→  Determine airPER to be
negligible (all of busy_
duration_delta is due to
time sharing)

1208

Y

Determine airPER based on
the correlation and a CCA_TH
level

*FIG. 12*

FIG. 13

*FIG. 14*

EP 3 721 665 B1

**EP 3 721 665 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9271153 B

- US 9642040 B